# FASCICULE DE BREVET EUROPEEN

(11) **EP 3 635 271 B1**
(45) Date de publication et mention de la délivrance du brevet: **04.05.2022**
(21) Numéro de dépôt: 18728565.5
(22) Date de dépôt: 24.05.2018
(51) Int. Cl.: F16D 21/06, F16D 25/08

(54) **MECANISME D'EMBRAYAGE COMPRENANT DEUX ENSEMBLES RELIES PAR UN DISPOSITIF D'ASSEMBLAGE**
KUPPLUNGSMECHANISMUS MIT ZWEI DURCH EINE MONTAGEVORRICHTUNG VERBUNDENEN ANORDNUNGEN
CLUTCH MECHANISM COMPRISING TWO ASSEMBLIES CONNECTED BY AN ASSEMBLING DEVICE

(30) Priorité: 31.05.2017 FR 1754841
(43) Date de publication de la demande: 15.04.2020
(73) Titulaire: Valeo Embrayages, 80009 Amiens Cedex 2 (FR)
(72) Inventeur: CAUMARTIN, Laurent, 80009 Amiens (FR); ARHAB, Rabah, 80009 Amiens (FR); RIBOT, Herve, 80009 Amiens (FR); DELPLACE, David, 80009 Amiens (FR)
(86) Numéro de dépôt international: PCT/EP2018/063731
(87) Numéro de publication internationale: WO 2018/219792

(56) Documents cités:
- WO-A1-2017/076752
- WO-A2-2015/124154
- DE-A1-102013 219 390
- FR-A1- 2 814 516

## Description

Le domaine de la présente invention est celui des transmissions pour véhicule automobile. L'invention relève plus spécifiquement du domaine des mécanismes à double embrayages pour véhicule automobile.

On connaît de l'art antérieur, par exemple du document DE 10 2013 219 390 A1, de tels mécanismes à double embrayages, généralement de type multidisques. De tels mécanismes sont destinés à être montés sur une boîte de vitesses d'un véhicule automobile en vue d'être couplés en rotation autour d'un axe. Ce type de mécanisme à double embrayages comprenant couramment un premier et deuxième embrayages associés respectivement à un premier et deuxième arbres. Les premier et deuxième embrayages de ces mécanismes à double embrayages peuvent être configurés pour être disposés dans une configuration axiale, c'est-à-dire que les embrayages et particulièrement, les disques des premier et deuxième embrayages sont disposés les uns par rapport aux autres autour de l'axe et selon un plan de symétrie perpendiculaire à l'axe.

Le document FR 2 814 516 décrit un tel mécanisme à double embrayages de type humide, c'est-à-dire alimenté en pression par un fluide hydraulique telle que de l'huile, permettant de lubrifier et de refroidir le mécanisme à double embrayages lorsque les disques respectifs des embrayages sont accouplés ou découplés dans une position respectivement embrayée ou débrayée.

En particulier, ce document décrit un tel mécanisme à double embrayages configuré pour être entraîné en rotation autour d'un axe et contenu dans une enveloppe formée par l'assemblage, par soudage, de deux couvercles d'embrayage et de deux parois délimitant ensemble deux chambres d'embrayage disposées en symétrie l'une par rapport à l'autre. Ces deux chambres comprennent respectivement un embrayage. De cette façon, les embrayages de ce mécanisme à double embrayages, et plus particulièrement leurs disques respectifs, sont disposés dans une configuration axiale telle que décrite précédemment. Les disques respectifs des embrayages sont disposés entre des plateaux de pression respectifs à chacun des embrayages ; et un élément annulaire médian correspondant à un organe de réaction est disposé entre les deux embrayages en vue d'être commun à ces derniers. Ces chambres sont en outre configurées pour être alimentées en huile sous pression. Lorsqu'une chambre d'un embrayage est alimentée en huile sous pression, les disques de l'embrayage correspondant sont maintenus compressés entre le plateau de pression de l'embrayage correspondant et le plateau de réaction commun aux deux embrayages. Lorsqu'une chambre d'un embrayage n'est pas alimentée en huile sous pression, les disques de l'embrayage correspondant ne sont plus maintenus compressés entre le plateau de pression de l'embrayage correspondant et l'organe de réaction commun aux deux embrayages.

Cette solution représente de nombreux inconvénients. Plus particulièrement, un premier inconvénient concerne l'organe de réaction commun aux deux embrayages. Dans cette configuration, les disques de chacun des embrayages exercent un effort de pression sur l'organe de réaction situé dans une position intermédiaire, entre les deux embrayages. L'organe de réaction peut alors être déplacé axialement en direction du plateau de pression de l'embrayage concerné. Ce déplacement a pour effet de décaler la course d'embrayage de l'autre embrayage non actionné. On comprendra ainsi que cette configuration a pour effet de générer des dépendances et des interactions entre les embrayages lorsqu'ils sont commandés.

Un deuxième inconvénient de cette solution concerne les étapes d'assemblage d'un tel mécanisme à double embrayages. En effet, dans une première étape d'assemblage pour assembler ce mécanisme il est nécessaire de positionner et maintenir l'organe de réaction entre les deux chambres d'embrayage dans une position assurant sa fonction de réaction des disques d'embrayage de chacun des embrayages. Dans une deuxième étape d'assemblage, chacune des chambres d'embrayage est solidarisée par un procédé de soudage entre l'extrémité d'un contour des chambres d'embrayage en contact avec l'organe de réaction, un tel procédé de soudure étant réalisé sur l'ensemble dudit contour. Ces étapes d'assemblage peuvent alors rendre difficile voire complexe un tel assemblage.

Un troisième inconvénient concerne un tel assemblage par soudage. En effet, un tel procédé de soudage a pour effet de contraindre les pièces par déformation localisée de ces dernières. Ces déformations localisées peuvent avoir pour conséquence de positionner l'organe de réaction dans une position axiale par rapport à chacune des chambres d'embrayage non souhaitée. Une telle position peut alors impacter la course de chacun des embrayages.

La présente invention a pour but de pallier à au moins l'un des inconvénients précités et de proposer un mécanisme d'embrayage permettant un assemblage simplifié tout en permettant une commande d'un embrayage sans perturbation sur l'autre embrayage.

A cet effet, l'invention a pour objet un mécanisme d'embrayage ayant les caractéristiques de la revendication 1.

Grâce à ces caractéristiques, il est possible de réaliser un mécanisme d'embrayage en deux parties. De plus, il est possible d'éviter de générer des dépendances et des interactions entre les embrayages lorsqu'ils sont commandés.

Le mécanisme d'embrayage conforme à l'invention peut comprendre avantageusement au moins un des perfectionnements ci-dessous, les caractéristiques techniques formant ces perfectionnements pouvant être prises seules ou en combinaison :
le dispositif d'assemblage assure l'assemblage des deux ensembles l'un à l'autre par le porte-disques extérieur de chaque ensemble ;
les organes de réactions de chaque ensemble sont distincts ;
les organes de réactions sont disposés axialement entre les embrayages des deux ensembles ;
l'organe de réaction est rapporté sur le porte-disques extérieur de l'ensemble associé.
l'organe de réaction de chaque ensemble est distinct du porte-disques extérieur de l'ensemble associé ;
les portes-disques extérieurs de chaque ensemble peuvent être de dimension axiale identique ;
les portes-disques extérieurs de chaque ensemble peuvent être de forme identique ;
au moins la première extension des portes-disques extérieurs est positionnée à une extrémité axiale du bord périphérique du porte-disques extérieur correspondant ;
au moins la première extension des portes-disques extérieurs est positionnée sur le bord périphérique à distance d'une extrémité axiale du porte-disques extérieur correspondant ;
au moins la première extension des portes-disques extérieurs est positionnée au-delà du bord périphérique extérieur à distance d'une extrémité axiale du porte-disques extérieur correspondant ;
au moins l'un des portes-disques extérieurs comprend une pluralité de premières extensions réparties angulairement autour du bord périphérique du porte-disques extérieur correspondant ;
avantageusement, chacun des portes-disques extérieurs comprend une pluralité de premières extensions réparties angulairement autour du bord périphérique du porte-disques extérieur correspondant ;
au moins l'une des premières extensions s'étend dans un plan perpendiculaire à l'axe sur un angle inférieur à 45° ;
au moins la première extension d'au moins un des portes-disques extérieurs forme un contour circulaire qui s'étend autour du bord périphérique du porte-disques extérieur correspondant ;
avantageusement au moins la première extension est confondue avec le bord périphérique ;
au moins la première extension est rapportée sur le bord périphérique du porte-disques extérieur d'au moins un ensemble du mécanisme d'embrayage ;
au moins la première extension est issue de matière avec le bord périphérique du porte-disques extérieur d'au moins un ensemble du mécanisme d'embrayage ;
le dispositif d'assemblage comprend au moins un rivet ou une vis d'assemblage configuré(e) pour passer au travers d'un trou d'assemblage formé dans au moins la première extension d'au moins un porte-disques extérieur ;
avantageusement, le dispositif d'assemblage comprend au moins un rivet ou une vis d'assemblage configuré(e) pour passer au travers d'un trou d'assemblage formé dans au moins la première extension d'un porte-disques extérieur et au travers d'un trou d'assemblage formé dans au moins la première extension de l'autre porte-disques extérieur ;
avantageusement, le dispositif d'assemblage comprend une pluralité de rivets et/ou de vis d'assemblage configuré(e) pour passer chacun au travers d'un trou d'assemblage formé dans une première extension d'un porte-disques extérieur et au travers d'un trou d'assemblage formé dans au moins la première extension de l'autre porte-disques extérieur ;
avantageusement, au moins la première extension d'un porte-disques est en appui axial contre au moins la première extension de l'autre porte-disques extérieur ;
avantageusement, l'organe de réaction d'au moins un ensemble est solidarisé à son porte-disques extérieur correspondant, par soudage, par exemple ;
avantageusement, la première partie de l'organe de réaction s'étend radialement par rapport à l'axe ;
avantageusement, la deuxième partie de l'organe de réaction s'étend radialement par rapport à l'axe ;
la deuxième partie de l'organe de réaction d'au moins un ensemble comprend un bord radial intérieur qui s'étend axialement en direction de l'embrayage dudit ensemble correspondant ;
avantageusement, la deuxième partie de l'organe de réaction d'au moins un ensemble comprend un bord radial intérieur qui s'étend axialement et radialement en direction de l'embrayage dudit ensemble correspondant ;
l'organe de réaction d'au moins un ensemble formé par la première partie et la deuxième partie présente une section en forme de S ;
avantageusement, l'organe de réaction d'au moins un ensemble présente une section en forme de I ;
avantageusement, l'organe de réaction d'au moins un ensemble présente une section en forme de L ;
avantageusement, l'organe de réaction d'au moins un ensemble présente une section en forme de Y ;
la première partie d'au moins un organe de réaction comprend un bord radial extérieur depuis lequel s'étendent radialement vers l'extérieur des premiers secteurs angulaires répartis angulairement autour de l'axe, chaque premier secteur angulaire de l'organe de réaction correspondant coopérant avec au moins la première extension du porte-disques extérieur correspondant ;
avantageusement, les premiers secteurs angulaires s'étendent radialement vers l'extérieur par rapport à l'axe ;
la première partie d'au moins un organe de réaction forme un contour circulaire qui s'étend périphériquement autour de l'axe ;
la première partie de l'organe de réaction d'au moins un ensemble est en appui axial contre la première partie de l'organe de réaction de l'autre ensemble ;
avantageusement, un jeu axial non nul est formé entre les deuxièmes parties des organes de réaction des ensembles ;
avantageusement, la première partie de l'organe de réaction de chaque ensemble est respectivement en appui axial contre le bord périphérique de son porte-disques correspondant ;
au moins un premier secteur angulaire de la première partie de l'organe de réaction d'au moins un ensemble est agencée pour coopérer avec au moins la première extension du porte-disques extérieur correspondant, en vue d'assembler l'organe de réaction à son porte-disques extérieur correspondant ;
avantageusement, au moins un premier secteur angulaire de la première partie de l'organe de réaction d'au moins un ensemble est agencé pour coopérer avec au moins la première extension du porte-disques extérieur correspondant, en vue d'assembler l'organe de réaction à son porte-disques extérieur correspondant ;
avantageusement, au moins le premier secteur angulaire de la première partie de l'organe de réaction d'au moins un ensemble est en appui axial contre au moins la première extension du porte-disques extérieur de l'ensemble correspondant ;
le dispositif d'assemblage comprend au moins un rivet ou une vis d'assemblage configuré(e) pour passer au travers d'un orifice d'assemblage formé dans au moins un premier secteur angulaire de la première partie de l'organe de réaction d'un ensemble et au travers d'un trou d'assemblage formé dans une première extension du porte-disques extérieur du même ensemble ;
la première partie de l'organe de réaction d'un ensemble est agencée pour coopérer avec la première partie de l'organe de réaction de l'autre ensemble pour assembler les ensembles l'un à l'autre, le dispositif d'assemblage comprenant la première partie de l'organe de réaction de chaque ensemble ;
la première partie de l'organe de réaction de chaque ensemble comprend des deuxièmes secteurs angulaires répartis angulairement autour de l'axe et qui s'étendent radialement vers l'extérieur depuis le bord radial extérieur, chaque deuxième secteur angulaire de l'organe de réaction d'un ensemble coopérant avec un deuxième secteur angulaire de l'organe de réaction de l'autre ensemble ;
avantageusement, au moins un deuxième secteur angulaire de la première partie de l'organe de réaction d'un ensemble est agencé pour coopérer avec au moins un deuxième secteur angulaire de la première partie de l'organe de réaction de l'autre ensemble en vue d'assembler les ensembles l'un à l'autre, le dispositif d'assemblage comprenant au moins le deuxième secteur angulaire correspondant de la première partie de l'organe de réaction de chaque ensemble ;
avantageusement, les deuxièmes secteurs angulaires de la première partie de l'organe de réaction d'un ensemble sont en appui axial contre les deuxièmes secteurs angulaires de la première partie de l'organe de réaction de l'autre ensemble ;
le dispositif d'assemblage comprend au moins un rivet ou une vis d'assemblage configuré(e) pour passer au travers d'un orifice d'assemblage formé dans au moins un deuxième secteur angulaire de la première partie de l'organe de réaction d'un ensemble et au travers d'un orifice d'assemblage formé dans au moins un deuxième secteur angulaire de la première partie de l'organe de réaction de l'autre ensemble ;
la première partie de l'organe de réaction d'au moins un ensemble est agencée pour coopérer, à la fois, avec la première partie de l'organe de réaction de l'autre ensemble et avec au moins la première extension du porte-disques extérieur de chaque ensemble ;
avantageusement, au moins un premier secteur angulaire de la première partie de l'organe de réaction d'au moins un ensemble est agencé pour coopérer, à la fois, avec au moins un premier secteur angulaire de la première partie de l'organe de réaction de l'autre ensemble et avec au moins la première extension du porte-disques extérieur de chaque ensemble en vue d'assembler les ensembles l'un à l'autre, le dispositif d'assemblage comprenant au moins le premier secteur angulaire correspondant de la première partie de l'organe de réaction de chaque ensemble et au moins la première extension correspondante du porte-disques extérieur de chaque ensemble ;
le dispositif d'assemblage comprend au moins un rivet ou une vis d'assemblage configuré(e) pour passer au travers d'un orifice d'assemblage formé dans au moins un premier secteur angulaire de la première partie de l'organe de réaction d'un ensemble et au travers d'un orifice d'assemblage formé dans au moins un premier secteur angulaire de la première partie de l'organe de réaction de l'autre ensemble ;
le dispositif d'assemblage comprend au moins un rivet ou une vis d'assemblage configuré(e) pour passer au travers d'un orifice d'assemblage formé dans au moins un premier secteur angulaire de la première partie de l'organe de réaction d'un ensemble et au travers d'un trou d'assemblage formé dans au moins la première extension du porte-disques extérieur de l'ensemble correspondant ;
le dispositif d'assemblage comprend au moins un rivet ou une vis d'assemblage configuré(e) pour passer au travers d'un orifice d'assemblage formé dans un premier secteur angulaire de la première partie de l'organe de réaction de chaque ensemble et au travers d'un trou d'assemblage formé dans au moins la première extension du porte-disques extérieur de chaque ensemble ;
avantageusement, le dispositif d'assemblage comprend une pluralité de rivets;
avantageusement, la première partie de l'organe de réaction d'au moins un ensemble comprend une zone d'assemblage agencée pour assembler l'organe de réaction avec le porte-disques extérieur correspondant ;
le porte-disques extérieur d'au moins un ensemble comprend au moins la deuxième extension s'étendant au-delà du bord périphérique du porte-disques extérieur de l'ensemble correspondant, au moins la deuxième extension comprend une première portion et une deuxième portion agencées en vue d'assembler les ensembles l'un à l'autre, le dispositif d'assemblage comprenant au moins la deuxième extension correspondante ;
avantageusement, la première portion s'étend axialement à l'opposé au-delà du bord périphérique du porte-disques extérieur correspondant et la deuxième portion s'étend radialement vers l'extérieur au-delà du bord périphérique du porte-disques extérieur correspondant ;
avantageusement, la deuxième portion est successive à la première portion ;
avantageusement, la première portion et la deuxième portion sont délimitées par un même pli de jonction ;
avantageusement, la première portion et la deuxième portion forment ensemble une section en forme de L ;
avantageusement, le bord périphérique du porte-disques extérieur correspondant et la première portion sont configurés pour recevoir en correspondance le bord radial extérieur de de la première partie de l'organe de réaction ;
chacun des portes-disques extérieurs comprend au moins une deuxième extension, au moins la deuxième extension d'un porte-disques extérieur étant agencée pour coopérer avec au moins la deuxième extension de l'autre porte-disques extérieur, le dispositif d'assemblage comprenant les deuxièmes extensions correspondantes ;
la première partie de l'organe de réaction d'au moins un ensemble comprend des deuxièmes secteurs angulaires répartis angulairement autour de l'axe et qui s'étendent radialement vers l'extérieur depuis le bord radial extérieur et au moins une deuxième extension d'un porte-disques extérieur d'un ensemble est agencée pour coopérer avec au moins un deuxième secteur angulaire de la première partie de l'organe de réaction de l'autre ensemble, le dispositif d'assemblage comprenant au moins la deuxième extension correspondante et au moins le deuxième secteur angulaire correspondant ;
la première partie de l'organe de réaction correspondant est en appui radial par son bord radial extérieur contre la première portion d'au moins la deuxième extension ;
le dispositif d'assemblage comprend au moins un rivet ou une vis d'assemblage configuré(e) pour passer au travers d'une ouverture d'assemblage formée dans la deuxième portion d'au moins une deuxième extension d'un porte-disques extérieur d'un ensemble et au travers d'une ouverture d'assemblage formée dans la deuxième portion d'au moins une deuxième extension d'un porte-disques extérieur de l'autre ensemble ;
le dispositif d'assemblage comprend au moins un rivet ou une vis d'assemblage configuré(e) pour passer au travers d'une ouverture d'assemblage formée dans la deuxième portion d'au moins une deuxième extension d'un porte-disques extérieur d'un ensemble et au travers d'un orifice d'assemblage formé dans au moins un deuxième secteur angulaire de la première partie de l'organe de réaction de l'autre ensemble ;
le mécanisme d'embrayage est un mécanisme d'embrayage du type double embrayages humide ;
les embrayages sont humides et disposés axialement l'un à côté de l'autre ;
L'invention porte également sur une transmission pour véhicule automobile, caractérisée en ce qu'elle comprend un mécanisme d'embrayage tel que décrit précédemment.

Avantageusement, la transmission comprend au moins une boîte de vitesses et une cloche d'embrayage qui délimite un volume dans lequel s'étend au moins en partie le mécanisme d'embrayage.

Un procédé d'assemblage d'un mécanisme d'embrayage sur une transmission d'un véhicule, pourrait comprendre Lles étapes suivantes :
- une étape de mise en position, consistant à disposer les ensembles l'un par rapport à l'autre de sorte que au moins la première extension de l'un des portes-disques extérieurs soit en regard d'au moins la première extension correspondante de l'autre porte-disques extérieur ;
- une étape d'assemblage, consistant à fixer les ensembles l'un à l'autre par au moins la première extension de chaque porte-disques extérieur à l'aide du dispositif d'assemblage correspondant.

Selon une variante, préalablement à l'étape de mise en position, l'organe de réaction de chaque ensemble est monté sur le porte-disques extérieur de l'ensemble correspondant par l'intermédiaire du dispositif d'assemblage.

Selon une variante, le procédé d'assemblage comprend une étape de centrage d'un ensemble par rapport à l'autre ensemble.

D'autres caractéristiques, détails et avantages de l'invention ressortiront plus clairement à la lecture de la description donnée ci-après à titre indicatif en relation avec des dessins dans lesquels :

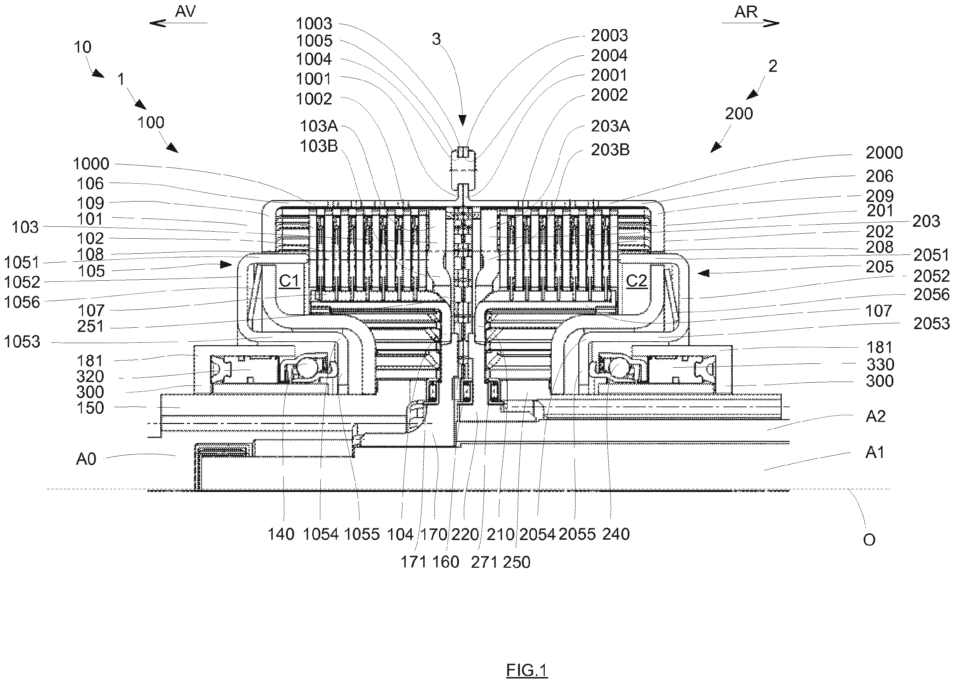

- la figure 1 illustre une vue en coupe d'un exemple de mécanisme d'embrayage selon le préambule de la revendication 1 dans lequel les ensembles sont assemblés à leur porte-disques extérieur correspondant par des premières extensions, les organes de réaction étant logés dans les cavités ;

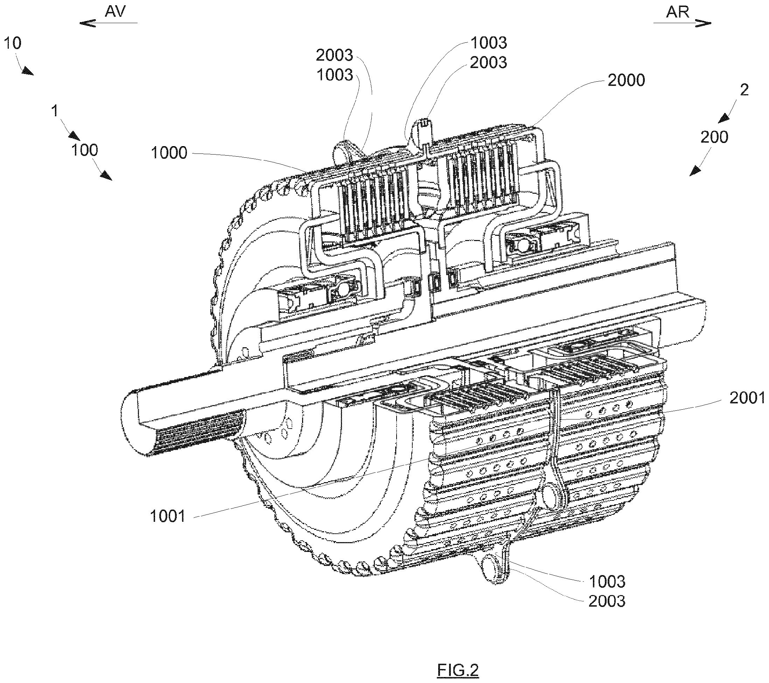

- la figure 2 illustre une vue en perspective l'exemple de la figure 1 ;

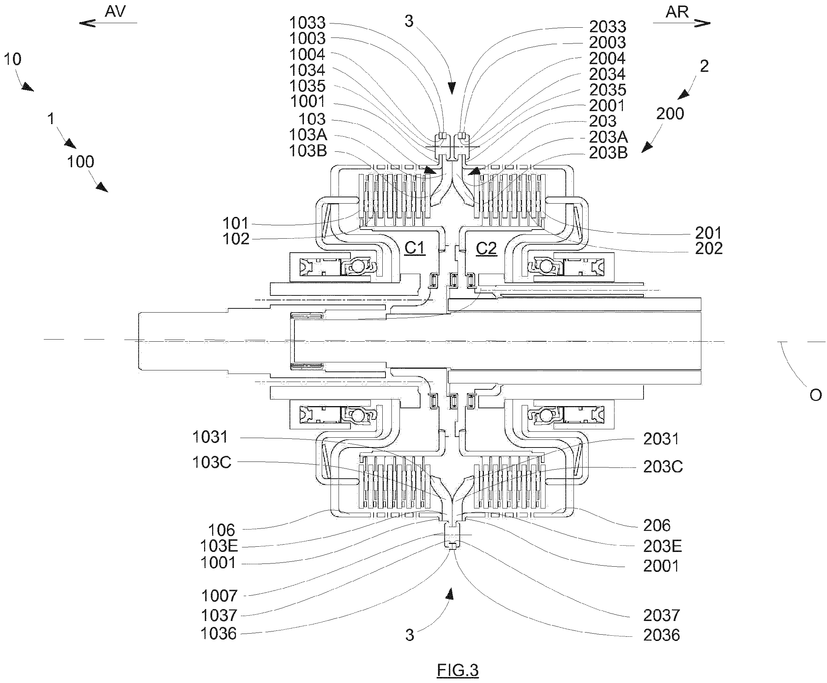

- la figure 3 illustre une vue en coupe d'un premier mode de réalisation dans lequel les organes de réaction sont assemblés à leur porte-disques correspondant par des premiers secteurs angulaires en correspondance des premières extensions des portes-disques, et les portes-disques des ensembles sont assemblés l'un à l'autre par des deuxièmes secteurs angulaires des organes de réaction ;

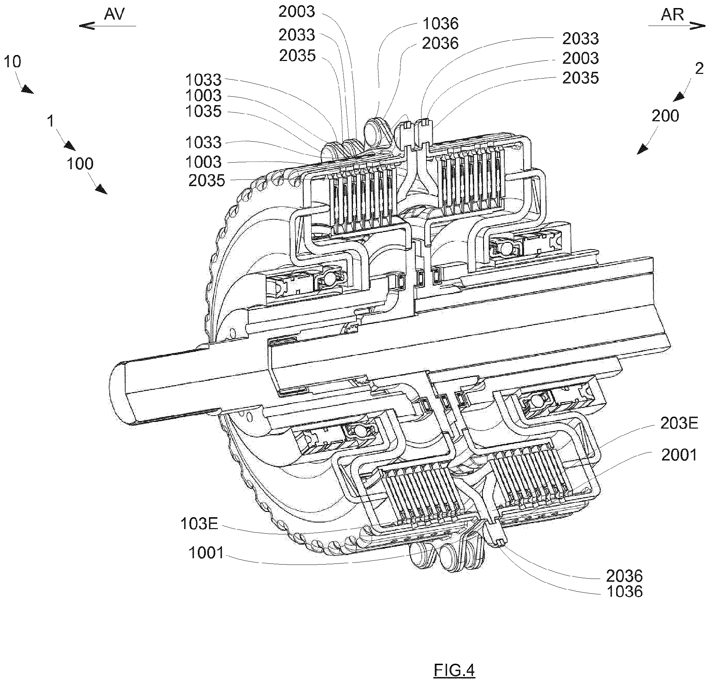

- la figure 4 illustre une vue en perspective du premier mode de réalisation de la figure 3 ;

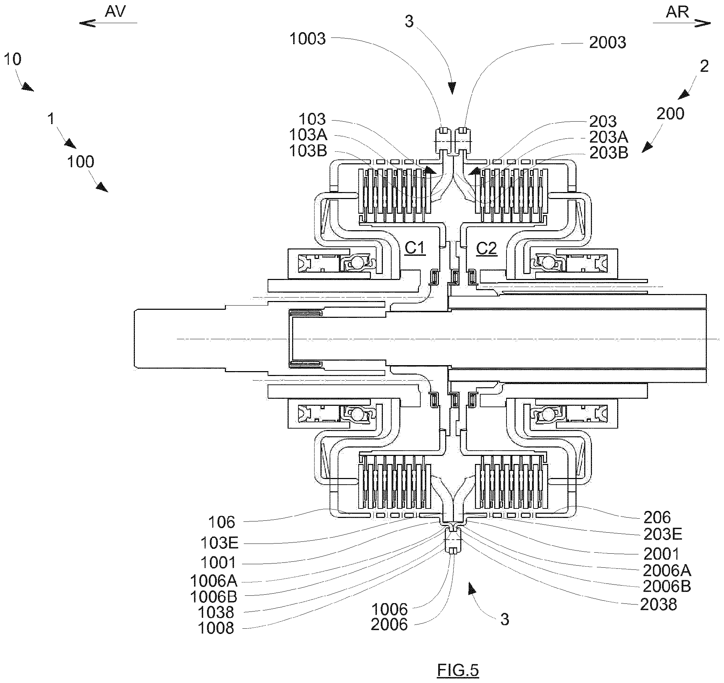

- la figure 5 illustre une vue en coupe d'un deuxième mode de réalisation dans lequel les organes de réaction sont assemblés à leur porte-disques correspondant par des premiers secteurs angulaires en correspondance des premières extensions des portes-disques, et les portes-disques des ensembles sont assemblés l'un à l'autre par des deuxièmes extensions des portes-disques ;

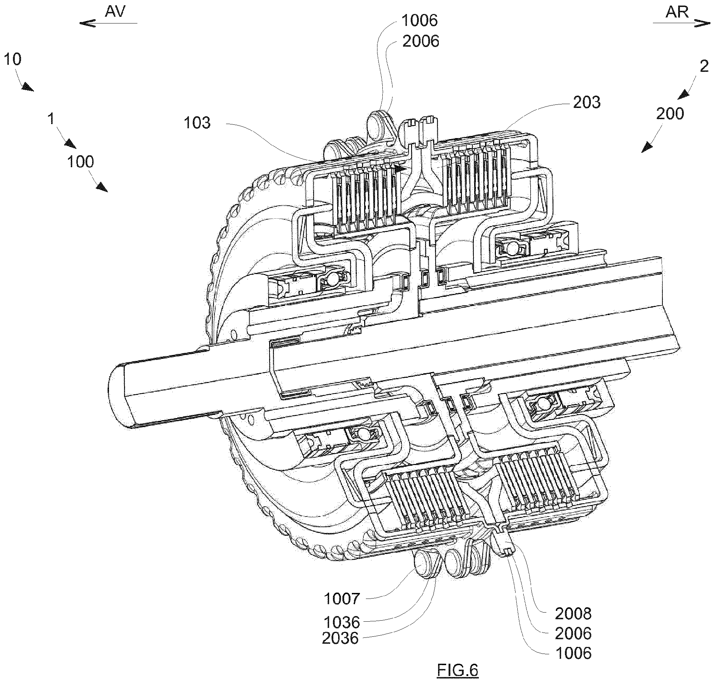

- la figure 6 illustre une vue en perspective du deuxième mode de réalisation de la figure 5 ;

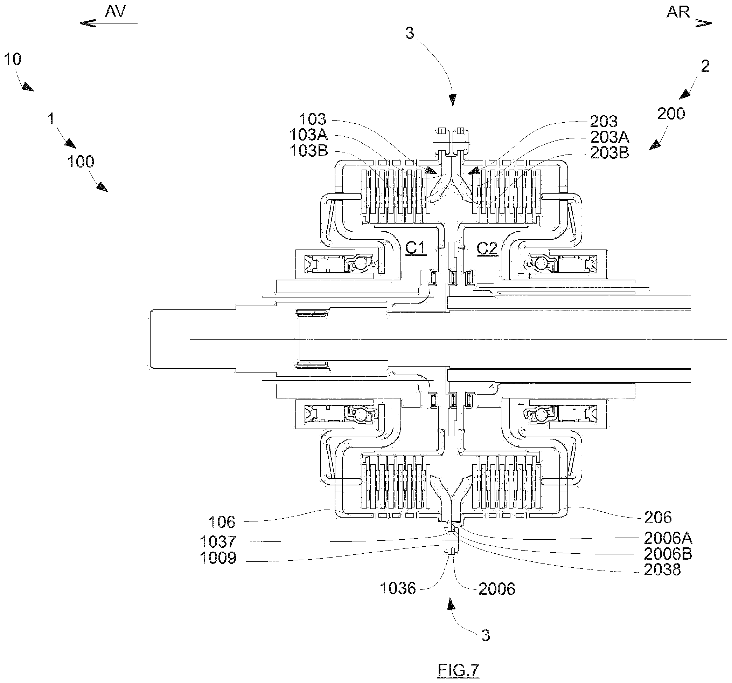

- la figure 7 illustre une vue en coupe d'un troisième mode de réalisation dans lequel les organes de réaction sont assemblés à leur porte-disques correspondant par des premiers secteurs angulaires en correspondance des premières extensions des portes-disques, et dans lequel le porte-disques d'un ensemble est assemblé à l'organe de réaction de l'autre ensemble par respectivement des deuxièmes extensions du porte-disques de l'ensemble correspondant et des deuxièmes secteurs angulaires de l'organe de réaction de l'ensemble correspondant ;

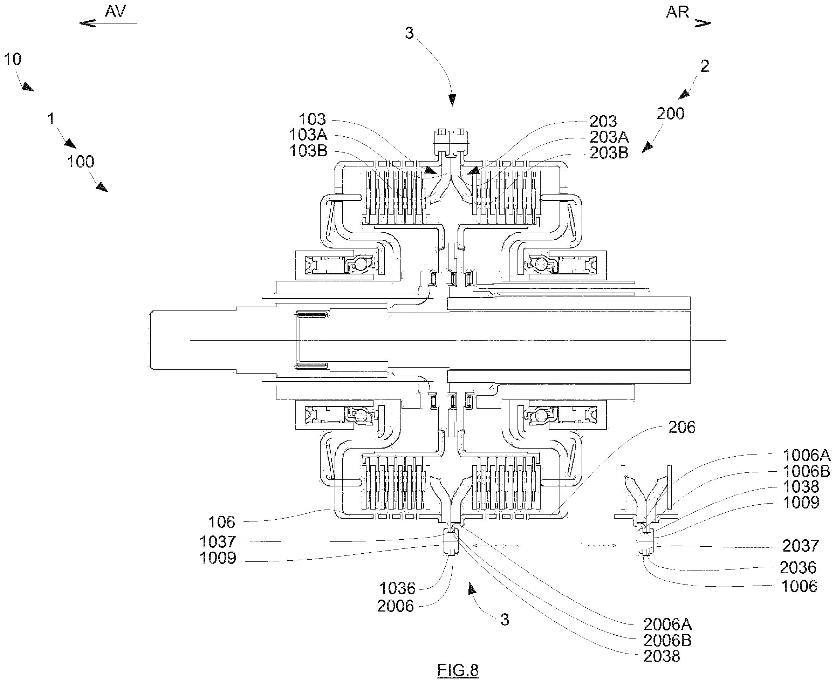

- la figure 8 illustre une vue en perspective d'une variante du troisième mode de réalisation de la figure 7 dans lequel chaque porte-disques d'un ensemble est assemblé à l'organe de réaction de l'autre ensemble par respectivement des deuxièmes extensions du porte-disques de l'ensemble correspondant et des deuxièmes secteurs angulaires de l'organe de réaction de l'ensemble correspondant ;

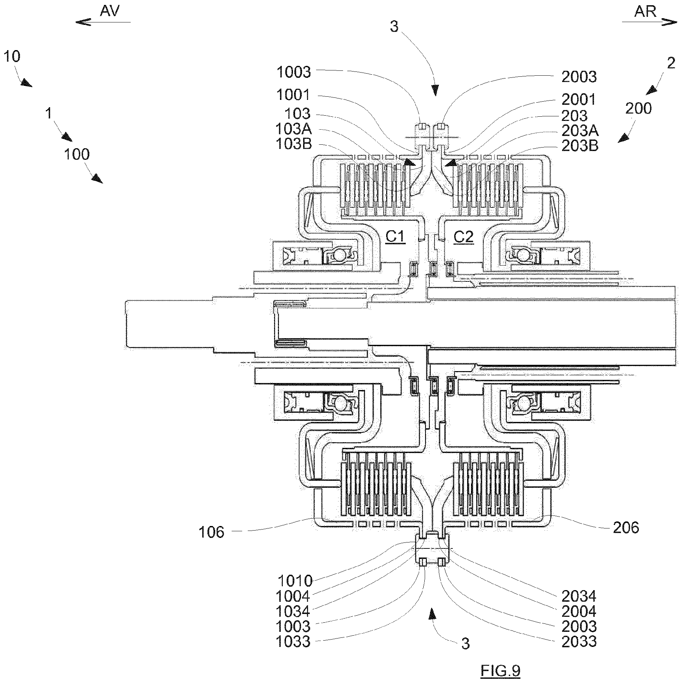

- la figure 9 illustre une vue en coupe d'un quatrième mode de réalisation dans lequel les organes de réaction de chaque ensemble sont assemblés l'un à l'autre, et les portes-disques et les organes de réaction de chaque ensemble sont assemblés les uns aux autres de l'autre ensemble par respectivement des premières extensions du porte-disques de l'ensemble correspondant et des premiers secteurs angulaires de l'organe de réaction de l'ensemble correspondant.

Dans la suite de la description et dans les revendications, on utilisera à titre non limitatif et afin d'en faciliter la compréhension, les termes :
« avant » AV ou « arrière » AR selon la direction par rapport à une orientation axiale déterminée par l'axe O principal de rotation du système de transmission, « l'arrière » désignant la partie située à droite des figures, du côté de la transmission, et « l'avant » désignant la partie gauche des figures, du côté du moteur ; et
« intérieur / interne » ou « extérieur / externe » par rapport à l'axe O et suivant une orientation radiale, orthogonale à ladite orientation axiale, « l'intérieur » désignant une partie proximale de l'axe O et « l'extérieur » désignant une partie distale de l'axe O ;
« correspondant » comme rattachant l'objet d'un ensemble ou l'ensemble auquel est rapporté ce terme à un autre objet du même ensemble.

On va tout d'abord décrire le mécanisme d'embrayage 10 illustré dans la figure 1. On notera, que les mécanismes d'embrayage 10 de chacun des modes de réalisation sont identiques et peuvent être décrits de façon similaire à l'exemple de la figure 1.

Ainsi, tel qu'illustré sur la figure 1, l'exemple de réalisation du mécanisme d'embrayage 10 est formé de deux ensembles 1, 2. Chaque ensemble 1, 2 formant une partie du mécanisme d'embrayage 10, les ensembles 1, 2 formant le mécanisme d'embrayage 10.

Le mécanisme d'embrayage 10 est entraîné en rotation autour d'un axe O et destiné à équiper une transmission d'un véhicule automobile. Pour cela, le mécanisme d'embrayage 10 est monté sur une cloche d'embrayage de la transmission du véhicule automobile.

Le mécanisme d'embrayage 10 préférentiellement du type à double embrayages humide, et préférentiellement encore dans une position dite axiale, un premier embrayage 100 formant un ensemble 1 situé vers l'avant AV par rapport à un deuxième embrayage 200 formant un autre ensemble 2. Le mécanisme à double embrayages 10 est intégré sur une chaine de transmission comprenant une transmission, non représentées sur la figure 1, la transmission étant couplée en rotation au mécanisme à double embrayages 10.

D'une manière générale, le mécanisme à double embrayages 10 est agencé pour pouvoir coupler en rotation un arbre d'entrée Ao à un premier arbre de transmission A1 ou alternativement à un deuxième arbre de transmission A2 par l'intermédiaire respectivement du premier embrayage 100 ou du deuxième embrayage 200.

Dans le contexte de l'invention, l'arbre d'entrée Ao est entraîné en rotation par au moins un vilebrequin d'un moteur, par exemple un moteur thermique non représenté sur la figure 1 ; et les premier et deuxième arbres de transmission A1, A2 sont destinés à être couplés en rotation à la transmission telle que par exemple une boîte de vitesses du type de celles équipant des véhicules automobiles.

De préférence, le premier arbre de transmission A1 et le deuxième arbre de transmission A2 sont coaxiaux. Plus particulièrement, le deuxième arbre de transmission A2 prend la forme d'un cylindre creux à l'intérieur duquel le premier arbre de transmission A1 peut être inséré.

Comme illustré sur la figure 1, le premier embrayage 100 et le deuxième embrayage 200 sont avantageusement du type multidisques. Chaque embrayage multidisques comprend d'une part une pluralité de disques d'accouplement 101, 201, liés solidairement en rotation à l'arbre d'entrée Ao, et d'autre part une pluralité de disques de friction 102, 202 liés solidairement en rotation à au moins l'un des arbres de transmission A1, A2. La pluralité de disques d'accouplement 101, 201 de chaque embrayage 100, 200 et la pluralité de disques de friction 102, 202 de chaque embrayage 100, 200 formant ensemble respectivement un empilement.

Le premier arbre de transmission A1 est couplé en rotation à l'arbre d'entrée Ao et entraîné par lui en rotation lorsque le premier embrayage 100 est configuré dans une position dite embrayée pour laquelle la pluralité de disques d'accouplement 101 est couplée en rotation à la pluralité de disques de friction 102. Alternativement, le premier arbre de transmission A1 est découplé en rotation de l'arbre d'entrée Ao lorsque le premier embrayage 100 est configuré dans une position dite débrayée pour laquelle la pluralité de disques d'accouplement 101 est découplée en rotation à la pluralité de disques de friction 102.

De manière analogue, le deuxième arbre de transmission A2 est couplé en rotation à l'arbre d'entrée Ao et entraîné par lui en rotation lorsque le deuxième embrayage 200 est configuré dans une position embrayée pour laquelle la pluralité de disques d'accouplement 201 est couplée en rotation à la pluralité de disques de friction 202. Alternativement, le deuxième arbre de transmission A2 est découplé en rotation de l'arbre d'entrée Ao lorsque le deuxième embrayage 200 est configuré dans une position dite débrayée pour laquelle la pluralité de disques d'accouplement 201 est découplée en rotation à la pluralité de disques de friction 202.

Dans le mécanisme à double embrayages 10 illustré sur la figure 1, le premier embrayage 100 est agencé pour engager les rapports impairs de la transmission et le deuxième embrayage 200 est agencé pour engager les rapports pairs et la marche arrière de la transmission. Alternativement, les rapports pris en charge par lesdits premier embrayage 100 et deuxième embrayage 200 peuvent être respectivement inversés.

Le premier embrayage 100 et le deuxième embrayage 200 sont agencés pour transmettre alternativement une puissance dite d'entrée - un couple et une vitesse de rotation - de l'arbre d'entrée, à l'un des deux arbres de transmission A1, A2, en fonction de la configuration respective de chaque embrayage 100 et 200 et par l'intermédiaire d'un voile d'entrée 109.

Les embrayages 100 et 200 sont agencés pour ne pas être simultanément dans la même configuration embrayée. En revanche, les premier et deuxième embrayages 100, 200 peuvent simultanément être configurés dans leur position débrayée.

On va maintenant décrire plus en détail le mécanisme à double embrayages 10.

Tel que représenté sur la figure 1, le mécanisme à double embrayages 10 comprend un élément d'entrée qui est couplé en rotation d'une part à l'arbre d'entrée Ao et d'autre part au voile d'entrée 109 afin de transmettre la puissance - le couple et la vitesse de rotation - générée au niveau du moteur à l'un des embrayages 100, 200 du mécanisme à double embrayages 10. De préférence, l'élément d'entrée du mécanisme à double embrayages 10 comprend un moyeu d'entrée 150, préférentiellement en rotation autour de l'axe O. Sur son élongation inférieure, le moyeu d'entrée 150 est lié en rotation et/ou axialement à l'arbre d'entrée Ao, éventuellement par l'intermédiaire d'un dispositif d'amortissement non représenté tel qu'un double volant amortisseur par exemple.

Sur son élongation extérieure, le moyeu d'entrée 150 est couplé au voile d'entrée 109, et plus particulièrement au niveau d'une extrémité inférieure et située vers l'arrière dudit voile d'entrée 109. Préférentiellement, le voile d'entrée 109 et le moyeu d'entrée 150 sont solidaires, par exemple fixés par soudage et/ou par rivetage.

Du côté de son extrémité supérieure, le voile d'entrée 109 du premier embrayage 100 est lié en rotation au premier embrayage 100 par l'intermédiaire d'un porte-disques extérieur 106 du premier embrayage 100, le porte-disques extérieur 106 étant lié au voile d'entrée 109, préférentiellement le voile d'entrée 109 et le porte-disques extérieur 106 sont issus de matière. Le porte-disques extérieur 106 du premier embrayage 100 délimite par l'extérieur une cavité Ci dans laquelle est logée l'empilement de disques d'accouplement 101 et de disques de friction 102 du premier embrayage 100.

Les premier et deuxième embrayages 100 et 200 sont commandés par un système d'actionnement 300 qui est agencé pour pouvoir les configurer dans une configuration quelconque comprise entre la configuration embrayée et la configuration débrayée.

Le système d'actionnement 300 comprend :
- un premier actionneur 320 agencé pour configurer le premier embrayage 100 dans une configuration comprise entre la configuration embrayée et la configuration débrayée ;
- un deuxième actionneur 330 agencé pour configurer le deuxième embrayage 200 dans une configuration comprise entre la configuration embrayée et la configuration débrayée ;
- un carter 181 du système d'actionnement 300 dans lequel est logés au moins en partie les premier et deuxième actionneurs 320, 330.

De manière préférentielle, les premier et deuxième actionneurs 320 et 330 sont du type vérin hydraulique. Les premier et deuxième actionneurs 320, 330 peuvent chacun comprendre un piston annulaire, chaque piston annulaire étant coaxial avec l'axe O et développant un mouvement axial pour configurer l'embrayage correspondant. Dans ce cas, le système d'actionnement 300 comprend aussi un canal d'alimentation en fluide hydraulique pour chaque actionneur 320, 330. Préférentiellement, le fluide hydraulique est un fluide sous pression, par exemple de l'huile.

Le premier actionneur 320 est lié au premier embrayage 100 par l'intermédiaire d'une part d'un premier palier de découplage 140 et d'autre part d'un premier organe de transmission de force 105. Le premier palier de découplage 140 est agencé pour transmettre des efforts axiaux générés par le premier actionneur 320 au premier organe de transmission de force 105.

Le premier organe de transmission de force 105 est agencé pour transmettre un effort axial au premier embrayage 100 via son élongation supérieure, ladite élongation supérieure s'étendant axialement vers l'avant et au travers d'une ouverture 108 aménagée dans le voile d'entrée 109 pour pouvoir presser la pluralité de disques d'accouplement 101 contre la pluralité de disques de friction 102 d'une part, et contre un organe de réaction 103 du premier embrayage 100 d'autre part décrit ultérieurement plus en détail dans les différents modes de réalisation.

Le premier organe de transmission de force 105 prend la forme d'une tôle ondulée et incurvée axialement vers l'avant à son extrémité radiale extérieure. Plus particulièrement, le premier organe de transmission de force 105 collabore avec le premier embrayage 100 par l'intermédiaire d'une pluralité de portées d'extension axiales 1051 formant des doigts supérieurs 1051 qui permettent de pousser vers l'avant les disques d'accouplement 101, 102 du premier embrayage 100 sous l'effet d'un mouvement axial vers l'avant du premier actionneur 320.

À titre d'exemple non limitatif, le premier organe de transmission de force 105 peut être obtenu par emboutissage.

Le premier organe de transmission de force 105 comprend une portée d'extension radiale supérieure 1052 située en avant des doigts supérieurs 1051. La portée d'extension radiale supérieure 1052 s'étend radialement depuis le premier embrayage 100.

Une portée d'extension axiale intermédiaire 1053 prolonge la portée d'extension radiale supérieure 1052, vers l'arrière du mécanisme à double embrayages 10.

Enfin, le premier organe de transmission de force 105 comprend une partie d'extension radiale intérieure 1055 reliée à la portée d'extension axiale intermédiaire 1053 par l'intermédiaire d'une zone incurvée 1054. La face avant de la partie d'extension radiale intérieure 1055 est en contact avec une face arrière du premier palier de découplage 140 connecté au premier actionneur 320.

L'organe de réaction 103 est solidaire du porte-disques extérieur 106 du premier embrayage 100. En particulier, l'organe de réaction 103 est arrêté axialement vers l'arrière par une butée d'arrêt axial. De préférence, l'organe de réaction 103 est fixé solidairement au porte-disques extérieur 106 du premier embrayage par tous moyens d'assemblage, tels que par exemple par rivetage ou par soudage.

L'organe de réaction 103 est rapporté sur le porte-disques extérieur 106 du premier embrayage 100.

L'organe de réaction 103 est configuré de manière à permettre un couplage par friction des disques d'accouplement et des disques de friction 101, 102 lorsque le premier actionneur 320 exerce un effort axial vers l'arrière pour configurer le premier embrayage 100 dans sa position embrayée. A contrario, lorsque le premier organe de transmission de force 105 est repoussé vers l'avant par une rondelle élastique de rappel 1056, alors les disques d'accouplement 101 se séparent des disques de friction 102, permettant ainsi de les découpler et de configurer le premier embrayage 100 dans sa configuration débrayée. On comprendra que la rondelle élastique de rappel 1056 est en appui contre le premier organe de transmission de force 105 et contre le voile d'entrée 109, et contraint axialement par le moyeu d'entrée 150 et le palier axial 171.

L'organe de réaction 103 présente notamment des cannelures extérieures qui coopèrent avec des cannelures intérieures correspondantes du porte-disques extérieur 106.

Le premier embrayage 100 est destiné à être couplé en rotation au premier arbre de transmission A1 par l'intermédiaire d'un premier porte-disques de sortie 104 formant un élément de sortie dudit premier embrayage 100.

Plus particulièrement, le premier porte-disques de sortie 104 est couplé en rotation aux disques de friction 102 au niveau de son extrémité supérieure d'une part, et d'autre part à un premier moyeu de sortie 170 au niveau de son extrémité inférieure.

Le premier porte-disques de sortie 104 comporte sur sa périphérie radiale extérieure une élongation axiale 107 qui est munie d'une denture destinée à coopérer avec une denture complémentaire sur chaque disque de friction 102, et plus particulièrement à la périphérie radiale intérieure de chaque disque de friction 102 du premier embrayage 100. Le premier porte-disques de sortie 104 est ainsi couplé en rotation par engrènement avec les disques de friction 102 du premier embrayage 100.

Au niveau de son extrémité radiale inférieure, le premier porte-disques de sortie 104 est lié au premier moyeu de sortie 170, préférentiellement fixés ensemble par soudage ou par rivetage.

Le premier moyeu de sortie 170 comporte radialement à l'intérieur des cannelures axiales agencées pour coopérer avec des cannelures complémentaires situées sur le premier arbre de transmission A1, de manière à réaliser un couplage en rotation.

Le palier axial 171 est interposé entre le premier moyeu de sortie 170 et le moyeu d'entrée 150 afin de supporter les efforts axiaux du moyeu d'entrée 150 et/ou du voile d'entrée 109 malgré les vitesses de rotation différentes auxquelles peuvent respectivement tourner l'arbre d'entrée et le premier arbre de transmission A1.

De manière analogue, le deuxième embrayage 200 du mécanisme à double embrayages 10 est de conception similaire à celle du premier embrayage 100.

Le deuxième actionneur 330 est lié au deuxième embrayage 200 par l'intermédiaire d'une part d'un deuxième palier de découplage 240 et d'autre part d'un deuxième organe de transmission de force 205. Le deuxième palier de découplage 240 est agencé pour transmettre des efforts axiaux générés par le deuxième actionneur 330 au deuxième organe de transmission de force 205.

Du côté de son extrémité supérieure, un voile d'entrée 209 du deuxième embrayage 200 est lié en rotation au deuxième embrayage 200 par l'intermédiaire d'un porte-disques extérieur 206 du deuxième embrayage 200, le porte-disques extérieur 206 du deuxième embrayage 200 étant lié au voile d'entrée 209, préférentiellement le voile d'entrée 209 et le porte-disques extérieur 206 sont issus de matière. Le porte-disques extérieur 206 du deuxième embrayage 200 délimite par l'extérieur une cavité C2 dans laquelle est logée l'empilement de disques d'accouplement 201 et de disques de friction 202 du deuxième embrayage 200.

Le deuxième organe de transmission de force 205 est agencé pour transmettre un effort axial au deuxième embrayage 200 via son élongation supérieure, ladite élongation supérieure s'étendant axialement vers l'avant et au travers d'une ouverture 208 aménagée dans le porte-disques extérieur 206 pour pouvoir presser les disques d'accouplement 201 contre les disques de friction 202 d'une part, et contre un organe de réaction 203 du deuxième embrayage 200 d'autre part décrit plus en détail ultérieurement dans les différents modes de réalisation.

Le deuxième organe de transmission de force 205 prend la forme d'une tôle ondulée et incurvée axialement vers l'avant à son extrémité radiale extérieure. Plus particulièrement, le deuxième organe de transmission de force 205 collabore avec le deuxième embrayage 200 par l'intermédiaire d'une pluralité de portées d'extension axiales 2051 formant des doigts intérieurs 2051 qui permettent de pousser vers l'avant les disques d'accouplement et de friction 201, 202 du deuxième embrayage 200 sous l'effet d'un mouvement axial vers l'avant du deuxième actionneur 330.

À titre d'exemple non limitatif, le deuxième organe de transmission de force 205 peut être obtenu par emboutissage.

Le deuxième organe de transmission de force 205 comprend une portée d'extension radiale supérieure 2052 située en arrière des doigts supérieurs 2051. La portée d'extension radiale supérieure 2052 s'étend radialement depuis le deuxième embrayage 200.

Une portée d'extension axiale intermédiaire 2053 prolonge la portée d'extension radiale supérieure 2052 sous le deuxième embrayage 200, vers l'avant du mécanisme à double embrayages 10. La portée d'extension axiale intermédiaire 2053 est située radialement à l'intérieur du deuxième embrayage 200.

Enfin, le deuxième organe de transmission de force 205 comprend une partie d'extension radiale intérieure 2055 reliée à la portée d'extension axiale intermédiaire 2053 par l'intermédiaire d'une zone incurvée 2054. La face arrière de la partie d'extension radiale intérieure 2055 est en contact avec une face avant du deuxième palier de découplage 240 connecté au deuxième actionneur 330.

L'organe de réaction 203 du deuxième embrayage 200 est solidaire du porte-disques extérieur 206 du deuxième embrayage 200. De préférence, l'organe de réaction 203 du deuxième embrayage 200 est fixé solidairement au porte-disques extérieur 206 du deuxième embrayage 200 par tous moyens, tels que par exemple par soudage ou par rivetage. L'organe de réaction 203 du deuxième embrayage 200 est configuré, de manière à permettre un couplage par friction des disques d'accouplement 201 et de friction 202 lorsque le deuxième actionneur 330 exerce un effort axial vers l'avant pour configurer le deuxième embrayage 200 dans sa position embrayée. A contrario, lorsque le deuxième organe de transmission de force 205 est repoussé vers l'arrière par une rondelle élastique de rappel 2056, alors les disques d'accouplement 201 se séparent des disques de friction 202, permettant alors de les découpler et ainsi de configurer le deuxième embrayage 200 dans sa configuration débrayée. On comprendra que la rondelle élastique de rappel 2056 est en appui contre le deuxième organe de transmission de force 205 et contre le voile d'entrée 209, et contraint axialement par une cale 250 et par un palier axial 271.

À titre d'exemple non limitatif, l'organe de réaction 203 du deuxième embrayage 200 peut prendre la forme d'un anneau avec une denture sur le pourtour extérieur et une gorge centrale d'appui qui s'étend axialement vers l'arrière.

L'organe de réaction 203 est rapporté sur le porte-disques extérieur 206 du deuxième embrayage 200.

Le deuxième embrayage 200 est destiné à être couplé en rotation au deuxième arbre de transmission A2 par l'intermédiaire d'un deuxième porte-disques de sortie 210 formant un élément de sortie dudit deuxième embrayage 200. Plus particulièrement, le deuxième porte-disques de sortie 210 est couplé en rotation aux disques de friction 202 au niveau de son extrémité supérieure d'une part, et d'autre part à un deuxième moyeu de sortie 220 au niveau de son extrémité inférieure.

Le deuxième porte-disques de sortie 210 comporte sur sa périphérie radiale extérieure une élongation axiale 207 qui est munie d'une denture destinée à coopérer avec une denture complémentaire sur chaque disque de friction 202, et plus particulièrement à la périphérie radiale intérieure de chaque disque de friction 202 du deuxième embrayage 200. Le deuxième porte-disques de sortie 210 est ainsi couplé en rotation par engrènement avec les disques de friction 202 du deuxième embrayage 200.

Au niveau de son extrémité radiale inférieure, le deuxième porte-disques de sortie 210 est lié au deuxième moyeu de sortie 220, préférentiellement fixés ensemble par soudage ou par rivetage. Par ailleurs, un palier axial 160 est intercalé entre le premier moyeu de sortie 170 et le deuxième moyeu de sortie 220 afin de pouvoir transmettre un effort axial entre les deux porte-disques de sortie 104, 210 qui peuvent tourner à des vitesses différentes lorsque les premier et deuxième embrayages 100, 200 sont configurés dans une configuration différente. Un jeu axial est aménagé entre le palier axial 160 et les premier et deuxième moyeux de sorties.

Le deuxième moyeu de sortie 220 comporte radialement à l'intérieur des cannelures axiales agencées pour coopérer avec des cannelures complémentaires situées sur le deuxième arbre de transmission A2, de manière à réaliser un couplage en rotation.

Le palier axial 271 est interposé entre le deuxième moyeu de sortie 220 et la cale 250 lié au voile d'entrée 209 du deuxième embrayage 200 afin de supporter les efforts axiaux de la cale 250 et/ou du voile d'entrée 209 malgré les vitesses de rotation différentes auxquelles peuvent respectivement tourner l'arbre d'entrée et le deuxième arbre de transmission A2.

Les premier et deuxième embrayages 100, 200 comprennent respectivement les rondelles élastiques de rappel 1056, 2056. Les rondelles élastiques de rappel 1056, 2056 sont agencés pour générer une force de rappel orientée axialement respectivement vers l'avant et vers l'arrière afin de repousser automatiquement le premier et le deuxième actionneur 320, 330 respectivement vers l'avant et vers l'arrière. Plus particulièrement, les rondelles élastiques de rappel 1056, 2056 sollicitent axialement le premier et le deuxième organe de transmission de force 105, 205 respectivement vers l'avant et vers l'arrière afin de faciliter l'écartement des disques d'accouplement 101, 201 par rapport aux disques de friction 102, 202 du premier et respectivement du deuxième embrayage 100, 200 en repoussant le premier et le deuxième actionneur 320, 330 respectivement vers l'avant et vers l'arrière.

Dans la suite de la description, on décrira les portes-disques extérieurs 106, 206 des ensembles 1, 2, et particulièrement le dispositif d'assemblage 3 des deux ensembles 1, 2 l'un à l'autre. Tel qu'il est décrit ci-après plusieurs modes de réalisation sont envisagés afin d'assembler les ensembles 1, 2 l'un à l'autre. Ainsi, le mécanisme d'embrayage 10 comprend plusieurs modes de réalisation de l'assemblage des portes-disques extérieurs 106, 206 de chaque ensemble 1, 2 entre eux et/ou plusieurs modes de réalisation de l'assemblage des organes de réaction 103, 203 l'un par rapport à l'autre et/ou sur les portes-disques extérieurs 106, 206 correspondants. On comprendra qu'un tel mécanisme d'embrayage 10 peut comprendre n'importe quelle combinaison des modes de réalisation de l'assemblage des portes-disques extérieurs 106, 206 de chaque ensemble 1, 2 entre eux et/ou des modes de réalisation de l'assemblage des organes de réaction 103, 203 l'un par rapport à l'autre et/ou sur les portes-disques extérieurs 106, 206 correspondants. On notera également qu'un tel mécanisme d'embrayage 10 peut être réalisé par une alternance de deux modes de réalisation complémentaires, par exemple un mode de réalisation de l'assemblage de deux ensembles 1, 2 par leurs porte-disques extérieurs 106, 206 et un autre mode de réalisation où les organes de réaction 103, 203 sont fixés ensemble et/ou à leurs porte-disques extérieurs 106, 206 correspondants.

De façon générale à chacun des modes de réalisation, le porte-disques extérieur 106 du premier embrayage 100 de l'ensemble 1 correspondant comprend une première portée d'élongation axiale 1000 orientée vers l'arrière en direction du deuxième embrayage 200 de l'autre ensemble 2. La première portée d'élongation axiale 1000 délimite radialement vers l'extérieur la cavité Ci à l'intérieur de laquelle le premier embrayage 100 est logé. Le porte-disques extérieur 206 du deuxième embrayage 200 de l'ensemble 2 comprend une deuxième portée d'élongation axiale 2000 orientée vers l'avant en direction du premier embrayage 100 de l'ensemble 1. La deuxième portée d'élongation axiale 2000 délimite radialement vers l'extérieur la cavité C2 à l'intérieur de laquelle le deuxième embrayage 200 est logé. Telles que représentées, la première portée d'élongation axiale 1000 et la deuxième portée d'élongation axiale 2000 comprennent respectivement un bord périphérique 1001, 2001 situé à leur extrémité axiale respective. On comprendra alors que chaque ensemble 1, 2 comprend un bord périphérique 1001, 2001. Le bord périphérique 1001 de la première portée d'élongation axiale 1000 et le bord périphérique 2001 de la deuxième portée d'élongation axiale 2000 s'étendent respectivement radialement vers l'extérieur au-delà de l'extrémité axiale respective de la première portée d'élongation axiale 1000 et de la deuxième portée d'élongation axiale 2000. On notera que le bord périphérique 1001, 2001 respectif de la première portée d'élongation axiale 1000 et de la deuxième portée d'élongation axiale 2000 sont circulaires autour de l'axe O, tel que représenté par exemple sur la figure 1 ou 2. Tels qu'illustré dans ce premier mode de réalisation, les bords périphériques 1001, 2001 des ensembles 1, 2 sont issus de matière. De préférence, le bord périphérique 1001, 2001 d'un ensemble 1, 2 peut être usiné par la surface en regard de l'autre bord périphérique 1001, 2001. Cette étape d'usinage a pour effet d'assurer le tolérancement entre les deux ensembles 1, 2 du mécanisme d'embrayage 10. On comprendra à cet égard que le porte-disques extérieur 106, 206 de chaque ensemble 1, 2 est dimensionné axialement de sorte à assurer leur positionnement et leur assemblage l'un par rapport à l'autre. En particulier on précisera que les portes-disques extérieurs 106, 206 des ensembles 1, 2 sont dimensionnés de sorte à assurer le positionnement du palier axial 160 intercalé entre le premier porte-disques de sortie 104 et le deuxième porte-disques de sortie 210. Des trous d'évacuation 1002, 2002 formés radialement respectivement sur la première portée d'élongation axiale 1000 et la deuxième portée d'élongation axiale 2000 permettent d'évacuer en partie le fluide hydraulique contenu dans les cavités Ci, C2 des embrayages 100, 200. On notera également qu'une cale de réglage axial 251 est intercalée entre le premier porte-disques de sortie 104 et le palier axial 160.

On notera également que les portes-disques extérieurs 106, 206 des ensembles 1, 2 sont identiques, particulièrement la première portée d'élongation axiale 1000 et la deuxième portée d'élongation axiale 2000 sont de dimension axiale identique. On comprendra que les empilements de disques d'accouplement 101, 201 et de disques de friction 102, 202 des premier et deuxième embrayages 100, 200 sont alors en nombre identique. Grâce à cette caractéristique, il est possible de baisser les coûts de production lors de la réalisation de tels mécanismes d'embrayage 10. En effet, le porte-disques extérieur 106, 206 des ensembles 1, 2 peut alors être commun aux premier et deuxième embrayages 100, 200.

Toutefois, l'invention n'est pas limitée à cette configuration et les portes-disques extérieurs 106, 206 des ensembles 1, 2 peuvent être identiques, particulièrement la première portée d'élongation axiale 1000 et la deuxième portée d'élongation axiale 2000 peuvent être de dimension axiale identique alors que l'empilement de disques d'accouplement 101, 201 et de disques de friction 102, 202 du premier et deuxième embrayages 100, 200 peuvent ne pas être en nombre identique.

En variante de l'invention, les portes-disques extérieurs 106, 206 des ensembles 1, 2 peuvent ne pas être identiques, particulièrement la première portée d'élongation axiale 1000 et la deuxième portée d'élongation axiale 2000 peuvent être de dimension axiale différente. Grâce à cette configuration, il est possible de réaliser des mécanismes d'embrayage 10 dont l'empilement de disques d'accouplement 101, 201 et de disques de friction 102, 202 du premier et deuxième embrayages 100, 200 sont en en nombre différent, en fonction des couples à transmettre entre l'arbre d'entrée et l'arbre de sortie correspondant. On comprendra que contrairement à un mécanisme d'embrayage 10 dont les portes-disques extérieurs 106, 206 sont issus de matière, il est possible de combiner des ensembles 1, 2 pour réaliser un mécanisme d'embrayage 10 souhaité. Par exemple, le premier embrayage 100 peut comprendre un nombre pair de disques d'accouplement 101 et de friction 102 alors que le deuxième embrayage 200 peut comprendre un nombre impair de disques d'accouplement 201 et de friction 202.

Ainsi, un ensemble 1, 2 peut être combiné à un autre ensemble 1, 2 pour parvenir au mécanisme d'embrayage 10 souhaité.

Selon un exemple de mécanisme d'embrayage illustré aux figures 1 et 2, l'organe de réaction 103, 203 de chaque ensemble 1, 2 est logé dans la cavité Ci, C2 respective du porte-disques extérieur 106, 206 de l'ensemble 1, 2 correspondant. Plus particulièrement, chaque organe de réaction 103, 203 est en appui, par une première partie 103A, 203A s'étendant radialement vers l'extérieur, contre l'empilement de disques d'accouplement 101, 201 et de disques de friction 102, 202 de l'embrayage 100, 200 correspondant. Une deuxième partie 103B de l'organe de réaction 103 du premier embrayage 100 s'étend principalement axialement vers l'arrière consécutivement à la première partie 103A de l'organe de réaction 103 du premier embrayage 100 alors qu'une deuxième partie 203B de l'organe de réaction 203 du deuxième embrayage 200 s'étend principalement axialement vers l'avant consécutivement à la première partie 203A du deuxième embrayage 200. Ainsi, on comprendra que les deuxièmes parties 103B, 203B s'étendent l'une vers l'autre. Selon cette même configuration, les organes de réaction 103, 203 sont respectivement solidarisés à leur porte-disques extérieur 106, 206 par un bord radial extérieur de leur première partie 103A, 203A. En particulier, l'organe de réaction 103 du premier embrayage 100 est arrêté axialement vers l'arrière par une butée d'arrêt axial et l'organe de réaction 203 du deuxième embrayage 200 est arrêté axialement vers l'avant par une autre butée d'arrêt axial. De préférence, les organes de réaction 103, 203 sont respectivement solidarisés à leur porte-disques extérieur 106, 206 par soudage. On comprendra que les organes de réaction 103, 203 sont de forme circulaire de révolution autour de l'axe O et sont annulaires en leur centre.

Les organes de réaction 103, 203 sont rapportés sur les porte-disques extérieur 106, 206 des premier et deuxième embrayages 100, 200.

Selon cet exemple de mécanisme d'embrayage, les bords périphériques 1001, 2001 des ensembles 1, 2 sont disposés de sorte à être en regard l'un de l'autre, plus particulièrement, les bords périphériques 1001, 2001 des ensembles 1, 2 sont symétriques l'un par rapport à l'autre. Dans cette configuration, un jeu axial est alors formé entre les organes de réaction 103, 203. Les extrémités radiales intérieures de chaque première partie 103A, 203A des organes de réaction forment chacune une zone de pression en appui axial contre leurs disques d'accouplement 101, 201 et de friction 102, 202 de l'embrayage 100, 200 correspondant. Toutefois, l'invention n'est pas limitée à cette configuration et les bords périphériques 1001, 2001 des ensembles 1, 2, selon l'un quelconque des modes de réalisation, peuvent être de section différente en étant toutefois disposés l'un en regard de l'autre.

Dans la configuration de l'exemple de mécanisme d'embrayage illustré aux figures 1 ou 2, les bords périphériques 1001, 2001 sont destinés à être en appui axial l'un contre l'autre lorsque les deux ensembles 1, 2 sont assemblés pour former le mécanisme d'embrayage 10.

Tel qu'illustré aux figures 1 et 2, le porte-disques extérieur 106 du premier embrayage 100 comprend des premières extensions 1003. De façon identique, le porte-disque extérieur 206 du deuxième embrayage 200 comprend des premières extensions 2003. Les premières extensions 1003, 2003 des portes-disques extérieurs 106, 206 s'étendent radialement vers l'extérieur au-delà des bords périphériques 1001, 2001 respectifs des portes-disques extérieurs 106, 206 correspondants. On comprendra que les premières extensions 1003, 2003 des portes-disques extérieurs 106, 206 s'étendent par ailleurs depuis les bords périphériques 1001, 2001 respectifs des portes-disques extérieurs 106, 206 correspondants. Telles que représentés, les premières extensions 1003, 2003 respectives de chaque porte-disques extérieur 106, 206 sont réparties angulairement autour du bord périphérique 1001, 2001 du porte-disques extérieur 106, 206 correspondant. On comprendra que les premières extensions 1003, 2003 respectives de chaque porte-disques extérieur 106, 206 sont régulièrement réparties angulairement autour de l'axe O.

A titre d'exemple, chaque porte-disques extérieur 106, 206 peut comprendre huit premières extensions 1003, 2003.

En variante, les premières extensions 1003, 2003 de chaque première partie 103A, 203A et leur bord périphérique 1001, 2001 respectif sont issus de matière. De préférence, les premières extensions 1003, 2003 de chaque première partie 103A, 203A sont rapportées sur leur bord périphérique 1001, 2001 respectif.

On notera également que les premières extensions 1003 du porte-disques extérieur 106 de l'ensemble 1 formé par le premier embrayage 100 sont configurées pour être en regard des premières extensions 2003 du porte-disques extérieur 206 de l'ensemble 2 formé par le deuxième embrayage 200. Plus particulièrement, les premières extensions 1003 du porte-disques extérieur 106 de l'ensemble 1 formé par le premier embrayage 100 sont configurées pour être en appui axial contre les premières extensions 2003 du porte-disques extérieur 206 de l'ensemble 2 formé par le deuxième embrayage 200. Les premières extensions 1003, 2003 des portes-disques extérieurs 106, 206 sont en outre configurées pour former en partie un dispositif d'assemblage 3 des deux ensembles 1, 2 l'un à l'autre.

Selon cet exemple de mécanisme d'embrayage, le dispositif d'assemblage 3 comprend chaque paire de premières extensions 1003, 2003 constituée par une première extension 1003 du porte-disques extérieur 106 de l'ensemble 1 formé par le premier embrayage 100 en regard d'une première extension 2003 du porte-disques extérieur 206 de l'ensemble 2 formé par le deuxième embrayage 200.

Telle qu'illustrée sur la figure 1, chaque première extension 1003 du porte-disques extérieur 106 de l'ensemble 1 formé par le premier embrayage 100 comprend des trous d'assemblage 1004 en correspondance de trous d'assemblage 2004 des premières extensions 2003 du porte-disques extérieur 206 de l'ensemble 2 formé par le deuxième embrayage 200. Par paire de premières extensions 1003, 2003 telle que définie précédemment, un rivet 1005 est destiné à passer au travers d'un trou d'assemblage 1004 d'une première extension 1003 du porte-disques extérieur 106 de l'ensemble 1 formé par le premier embrayage 100 et au travers d'un trou d'assemblage 2004 d'une première extension 2003 du porte-disques extérieur 206 de l'ensemble 2 formé par le deuxième embrayage 200.

On comprendra que, pour assurer l'assemblage des deux ensembles 1, 2 l'un à l'autre par les premières extensions 1003, 2003, le rivet 1005 de chaque paire de premières extensions 1003, 2003 est embouti pour s'étendre radialement au-delà des trous d'assemblage 1004, 2004 de sorte à maintenir serrées les premières extensions 1004, 2004 de chaque paire.

Selon cet exemple de mécanisme d'embrayage, le dispositif d'assemblage 3 comprend en outre chacun des rivets 1005 tels que décrits précédemment. Plus particulièrement, le dispositif d'assemblage 3 comprend chaque paire de premières extensions 1003, 2003 et chaque rivet 1005 destiné à coopérer avec ladite paire.

En variante, les trous d'assemblage 1004, 2004 des premières extensions 1003, 2003 sont des trous taraudés configurés pour recevoir chacun une vis d'assemblage.

Selon un premier mode de réalisation illustré aux figures 3 et 4 et contrairement au premier mode de réalisation décrit ultérieurement, l'organe de réaction 103, 203 de chaque ensemble 1, 2 s'étend en partie radialement au-delà de la cavité C1, C2 respective du porte-disques extérieur 106, 206 de l'ensemble 1, 2 correspondant. Dans cette configuration, les organes de réaction 103, 203 ne sont logés dans leur cavité respective C1, C2 et ne sont plus arrêtés axialement en direction de l'autre embrayage par une butée d'arrêt axial. Dans cette configuration et contrairement au premier mode de réalisation, les organes de réaction 103, 203 sont en appui axial l'un contre l'autre, au moins au niveau de leur première partie 103, 203.

Les organes de réaction 103, 203 sont également de forme circulaire de révolution autour de l'axe O et sont annulaires en leur centre.

Les organes de réaction 103, 203 sont rapportés sur les porte-disques extérieur 106, 206 des premier et deuxième embrayages 100, 200.

Plus particulièrement, chaque organe de réaction 103, 203 comprend une première partie 103A, 203A s'étendant de façon radiale principalement à l'extérieur de la cavité Ci, C2, soit au-delà du bord périphérique 1001, 2001 du porte-disques extérieur 106, 206 correspondant, et une deuxième partie 103B, 203B située à l'intérieur de la cavité C1, C2, soit à l'intérieur par rapport au bord périphérique 1001, 2001 du porte-disques extérieur 106, 206 correspondant. Chaque organe de réaction 103, 203 formé par la première partie 103A, 203A et la deuxième partie 103B, 203B présente alors une section en forme de S. On notera que la première partie 103A, 203A et la deuxième partie 103B, 203B respectives de chaque organe de réaction 103, 203 ont une extrémité 103C, 203C commune. La deuxième partie 103B, 203B de chaque organe de réaction 103, 203 des ensembles 1, 2 comprend un bord radial intérieur 1031, 2031 qui s'étend axialement et radialement en direction de l'embrayage 100, 200 dudit ensemble 1, 2 correspondant. La première partie 103A, 203A et la deuxième partie 203B, 203B de chaque organe de réaction 103, 203 présentent ensemble une section en forme de S.

Toutefois, l'invention n'est pas limitée à cette configuration. En l'occurrence, la première partie 103A, 203A et la deuxième partie 203B, 203B de chaque organe de réaction 103, 203 pourraient présenter ensemble une section en forme de L. Dans ce cas, à la différence de la première partie 103A, 203A et de la deuxième partie 103B, 203B décrites précédemment dans ce deuxième mode de réalisation, la deuxième partie 103B, 203B de chaque organe de réaction 103, 203 des ensembles 1, 2 comprendrait un bord radial intérieur 1031, 2031 qui s'étend axialement en direction de l'embrayage 100, 200 dudit ensemble 1, 2 correspondant.

Dans la configuration illustrée aux figures 3 et 4, la deuxième partie 103B, 203B de chaque organe de réaction 103, 203 est en appui axial par un bord radial intérieur 1031, 2031 contre l'empilement de disques d'accouplement 101, 201 et de disques de friction 102, 202 de l'embrayage 100, 200 correspondant. Telle que représentée, la deuxième partie 103B de l'organe de réaction 103 du premier embrayage 100 s'étend axialement et radialement vers l'avant consécutivement à la première partie 103A de l'organe de réaction 103 du premier embrayage 100 alors que la deuxième partie 203B de l'organe de réaction 203 du deuxième embrayage 200 s'étend axialement et radialement vers l'arrière consécutivement à la première partie 203A de l'organe de réaction 203 du deuxième embrayage 200. Ainsi, on comprendra que les deuxièmes parties 103B, 203B s'étendent à l'opposé l'une de l'autre.

Les bords périphériques 1001, 2001 des ensembles 1, 2 sont disposés de sorte à être en regard l'un de l'autre, plus particulièrement, les bords périphériques 1001, 2001 des ensembles 1, 2 sont symétriques l'un par rapport à l'autre.

Les premières parties 103A, 203A des organes de réaction 103, 203 sont configurées pour être, à la fois, en appui axial l'une contre l'autre et pour être en appui axial par un bord radial extérieur 103E, 203E contre respectivement le bord périphérique 1001, 2001 du porte-disques extérieur 106, 206 correspondant. Tel que représenté, le bord radial extérieur 103E, 203E d'un organe de réaction 103, 203 affleure radialement le bord périphérique 1001, 2001 du porte-disques extérieur 106, 206 correspondant.

Pour solidariser les organes de réaction 103, 203 à leur porte-disques extérieur 106, 206 respectif, la première partie 103A, 203A de chaque organe de réaction 103, 203 comprend le bord radial extérieur 103E, 203E depuis lequel s'étendent radialement vers l'extérieur des premiers secteurs angulaires 1033, 2033 en nombre quelconque, préférentiellement régulièrement angulairement répartis autour de l'axe O.

Tel qu'illustré aux figures 3 et 4, le porte-disques extérieur 106 du premier embrayage 100 comprend des premières extensions 1003. De façon identique, le porte-disque extérieur 206 du deuxième embrayage 200 comprend des premières extensions 2003. Les premières extensions 1003, 2003 des portes-disques extérieurs 106, 206 s'étendent radialement vers l'extérieur au-delà des bords périphériques 1001, 2001 respectifs des portes-disques extérieurs 106, 206 correspondants. Telles que représentées sur la figure 4, les premières extensions 1003, 2003 respectives de chaque porte-disques extérieur 106, 206 sont réparties angulairement autour du bord périphérique 1001, 2001 du porte-disques extérieur 106, 206 correspondant.

A titre d'exemple, chaque porte-disques extérieur 106, 206 peut comprendre huit premières extensions 1003, 2003.

Dans la configuration du premier mode de réalisation illustré aux figures 3 ou 4, la première partie 103A, 203A de l'organe de réaction 103, 203 d'au moins un ensemble 1, 2 est agencée pour coopérer avec les premières extensions 1003, 2003 du porte-disques extérieur 106, 206 correspondant, en vue d'assembler l'organe de réaction 103, 203 à son porte-disques extérieur 106, 206 correspondant. Plus particulièrement, chaque premier secteur angulaire 1033, 2033 de l'organe de réaction 103, 203 correspondant est configuré pour coopérer avec une première extension 2003 du porte-disques extérieur 106, 206 correspondant en vue d'assembler l'organe de réaction 103, 203 à son porte-disques extérieur 106, 206 correspondant.

On notera également que les premiers secteurs angulaires 1033, 2033 d'un organe de réaction 103, 203 d'un ensemble 1, 2 sont configurés pour être en regard des premières extensions 1003, 2003 du porte-disques extérieur 106, 206 du même ensemble 1, 2. Plus particulièrement, les premiers secteurs angulaires 1033, 2033 d'un organe de réaction 103, 203 d'un ensemble 1, 2 sont configurés pour être en appui axial contre les premières extensions 1003, 2003 du porte-disques extérieur 106, 206 du même ensemble 1, 2.

A titre d'exemple, chaque organe de réaction 103, 203 peut comprendre huit premiers secteurs angulaires 1033, 2033 configurés pour coopérer respectivement avec les huit premières extensions 1003, 2003.

Selon ce premier mode de réalisation de l'invention, le dispositif d'assemblage 3 comprend chaque paire de premier secteur angulaire 1033, 2033 et première extension 1003, 2003 constituée par un premier secteur angulaire 1033, 2033 d'un organe de réaction 103, 203 d'un ensemble 1, 2 en regard d'une première extension 1003, 2003 du porte-disques extérieur 106, 206 du même ensemble 1, 2.

Par paire de premier secteur angulaire 1033, 2033 et première extension 1003, 2003, un rivet 1035, 2035 est destiné à traverser un orifice d'assemblage 1034, 2034 formé dans un premier secteur angulaire 1033, 2033 de la première partie 103A, 203A de l'organe de réaction 103, 203 d'un ensemble 1, 2 et à traverser un trou d'assemblage 1004, 2004 formé dans une première extension 1003, 2003 du porte-disques extérieur 106, 206 du même ensemble 1, 2. On comprendra que les orifices d'assemblage 1034, 2034 formés dans chacun des premiers secteurs angulaires 1033, 2033 d'un organe de réaction 103, 203 d'un ensemble 1, 2 sont en correspondance des trous d'assemblage 1004, 2004 formés dans chacune des premiers extensions1003, 2003 d'un même ensemble 1, 2.

Le dispositif d'assemblage 3 permet alors de réaliser l'assemblage de chaque organe de réaction 103, 203 à son porte-disques extérieur 106, 206 correspondant à l'aide de chacun des rivets 1035, 2035 décrits précédemment dans ce premier mode de réalisation.

On comprendra que, pour assurer l'assemblage de chaque organe de réaction 103, 203 à son porte-disques extérieur 106, 206 correspondant, le rivet 1035, 2035 de chaque paire de premier secteur angulaire 1033, 2033 et première extension 1003, 2003 est embouti pour s'étendre radialement au-delà de l'orifice d'assemblage 1034, 2034 et du trou d'assemblage 1004, 2004 de sorte à maintenir serrés les premiers secteurs angulaires 1033, 2033 et premières extensions 1003, 2003 de chaque paire telle que décrite précédemment dans ce premier mode de réalisation.

A l'état monté, les premiers secteurs angulaires 1033, 2033 et les premières extensions 1003, 2003 d'un ensemble 1, 2 sont en regard des premiers secteurs angulaires 1033, 2033 et des premières extensions 1003, 2003 de l'autre ensemble 1, 2. Plus particulièrement, les orifices d'assemblage 1034, 2034 et les trous d'assemblage 1004, 2004 d'un ensemble 1, 2 sont en correspondance des orifices d'assemblage 1034, 2034 et des trous d'assemblage 1004, 2004 de l'autre ensemble 1, 2. On comprendra que les rivets 1035 assurant l'assemblage de l'organe de réaction 103 à son porte-disques extérieur 106 de l'ensemble 1 formé par le premier embrayage 100 peuvent être en regard des rivets 2035 assurant l'assemblage de l'organe de réaction 203 à son porte-disques extérieur 206 de l'autre ensemble 2 formé par le deuxième embrayage 200. Les rivets 1035, 2035 de l'ensemble 1, 2 correspondant sont toutefois distants des rivets 1035, 2035 de l'autre ensemble 1, 2, ceci grâce au retrait axial des premiers secteurs angulaires 1035, 2035 par rapport à une zone d'appui des premières parties 103A, 203A de chaque ensemble 1, 2 l'une contre l'autre.

Selon ce premier mode de réalisation de l'invention, le dispositif d'assemblage 3 comprend en outre chacun des rivets 1035, 2035 tels que décrits précédemment et participant à l'assemblage des organes de réaction 103, 203 à leurs portes-disques 103, 206. Plus particulièrement, le dispositif d'assemblage 3 comprend chaque paire de premier secteur angulaire 1033, 2033 et première extension 1003, 2003 et chaque rivet 1035, 2035 destiné à coopérer avec ladite paire.

En variante de l'invention, chacun des orifices d'assemblage 1034, 2034 des premières extensions 1003, 2003 sont des trous taraudés configurés pour recevoir chacun une vis d'assemblage.

En variante, les premiers secteurs angulaires 1033, 2033 de chaque première partie 103A, 203A et leur bord radial extérieur 103E, 203E respectif sont issus de matière. De préférence, les premiers secteurs angulaires 1033, 2033 de chaque première partie 103A, 203A sont rapportés sur leur bord périphérique 1001, 2001 respectif.

On notera que dans cette configuration le dispositif d'assemblage 3, tel que décrit précédemment dans ce deuxième mode de réalisation, ne permet pas d'assembler les deux ensembles 1, 2 l'un à l'autre, toutefois, il participe à réaliser l'assemblage des deux ensembles 1, 2 l'un à l'autre, tel que décrit ci-après.

Pour solidariser les ensembles 1, 2 l'un à l'autre, la première partie 103A de l'organe de réaction 103 d'un ensemble 1 est agencée pour coopérer avec la première partie 203A de l'organe de réaction 203 de l'autre ensemble 2, le dispositif d'assemblage 3 comprenant la première partie 103A, 203A de l'organe de réaction de chaque ensemble. Plus particulièrement, des deuxièmes secteurs angulaires 1036, 2036 répartis angulairement autour de l'axe O et qui s'étendent radialement vers l'extérieur depuis le bord radial extérieur 103E, 203E de l'organe de réaction 103, 203 correspondant permettent d'assembler les ensembles 1, 2 l'un à l'autre.

On comprendra que les deuxièmes secteurs angulaires 1036, 2036 sont distincts des premiers secteurs angulaires 1033, 2033. Ainsi, la première partie 103A, 203A de chaque organe de réaction 103, 203 comprend, à la fois, une pluralité de premiers secteurs angulaires 1033, 2033 et une pluralité de deuxièmes secteurs angulaires 1036, 2036. Selon ce deuxième mode de réalisation, les premiers secteurs angulaires 1033, 2033 d'un ensemble 1, 2 sont répartis angulairement autour de l'axe O en alternance avec les deuxièmes secteurs angulaires 1036, 2036 du même ensemble 1, 2.

On comprendra également que les deuxièmes secteurs angulaires 1036, 2036 de chaque première partie 103A, 203A s'étendent radialement à l'extérieur de la cavité Ci, C2 de leur ensemble 1, 2 respectif.

A titre d'exemple, chaque organe de réaction 103, 203 peut comprendre huit deuxièmes secteurs angulaires 1036, 2036.

Telle qu'illustrée aux figures 3 ou 4, la première partie 103A de l'organe de réaction 103 de l'ensemble 1 formant le premier embrayage 100 est agencée pour coopérer avec la première partie 203A de l'organe de réaction 203 de l'ensemble 2 formant le deuxième embrayage 200. Plus particulièrement, les deuxièmes secteurs angulaires 1036 de la première partie 103A de l'organe de réaction 103 de l'ensemble 1 formant le premier embrayage 100 sont agencés pour coopérer avec les deuxièmes secteurs angulaires 2036 de la première partie 203A de l'organe de réaction 203 de l'ensemble 2 formant le deuxième embrayage 200. On comprendra alors que, dans cette configuration, les deux ensembles 1, 2 sont assemblés l'un à l'autre à l'aide de leur organe de réaction 103, 203 respectif.

On notera également que les deuxièmes secteurs angulaires 1036, 2036 d'un organe de réaction 103, 203 d'un ensemble 1, 2 sont configurés pour être en regard des deuxièmes secteurs angulaires 1036, 2036 de l'organe de réaction 103, 203 de l'autre ensemble 1, 2. Plus particulièrement, les deuxièmes secteurs angulaires 1036, 2036 d'un organe de réaction 103, 203 d'un ensemble 1, 2 sont configurés pour être en appui axial contre les deuxièmes secteurs angulaires 1036, 2036 de l'organe de réaction 103, 203 de l'autre ensemble 1, 2.

A titre d'exemple, les huit deuxièmes secteurs angulaires 1036 de l'organe de réaction 103 de l'ensemble 1 formant le premier embrayage 100 sont configurés pour coopérer avec les huit deuxièmes secteurs angulaires 2036 de l'organe de ré action 203 de l'ensemble 2 formant le deuxième embrayage 200.

Selon ce premier mode de réalisation de l'invention, le dispositif d'assemblage 3 comprend en outre chaque paire de deuxièmes secteurs angulaires 1036, 2036 constituée par un deuxième secteur angulaire 1036 de la première partie 103A de l'organe de réaction 103 de d'un ensemble 1 en regard d'un deuxième secteur angulaire 2036 de la première partie 203A de l'organe de réaction 203 de l'autre ensemble 2.

Par paire de deuxièmes secteurs angulaires 1036, 2036, un rivet 1007 est destiné à traverser un orifice d'assemblage 1037, 2037 formé dans un deuxième secteur angulaire 1036, 2036 de la première partie 103A, 203A de l'organe de réaction 103, 203 d'un ensemble 1, 2 et à traverser un orifice d'assemblage 1037, 2037 formé dans un deuxième secteur angulaire 1036, 2036 de la première partie 103A, 203A de l'organe de réaction 103, 203 de l'autre ensemble 1, 2. On comprendra que les orifices d'assemblage 1037, 2037 formés dans chacun des deuxièmes secteurs angulaires 1036, 2036 d'un organe de réaction 103, 203 d'un ensemble 1, 2 sont en correspondance des orifices d'assemblage 1037, 2037 formés dans chacun des deuxièmes secteurs angulaires 1036, 2036 d'un organe de réaction 103, 203 de l'autre ensemble 1, 2.

Le dispositif d'assemblage 3 permet alors de réaliser l'assemblage des ensembles 1, 2 l'un à l'autre par l'intermédiaire de l'organe de réaction 103, 203 de chaque ensemble 1, 2, à l'aide de chacun des rivets 1007 assurant cet assemblage et décrits précédemment dans ce premier mode de réalisation.

On comprendra que, pour assurer l'assemblage des ensembles 1, 2 l'un à l'autre, à l'aide de l'organe de réaction 103, 203 de chaque ensemble 1, 2, le rivet 1007 de chaque paire de deuxièmes secteurs angulaires 1036, 2036 est embouti pour s'étendre radialement au-delà des orifices d'assemblage 1037, 2037 de la paire correspondante de sorte à maintenir serrés les deuxièmes secteurs angulaires 1036, 2036 de chaque paire participant à l'assemblage des deux ensembles 1, 2 tel que décrit précédemment dans ce premier mode de réalisation.

On comprendra que, à l'état monté, les deuxièmes secteurs angulaires 1036, 2036 d'un ensemble 1, 2 sont en regard des deuxièmes secteurs angulaires 1036, 2036 de l'autre ensemble 1, 2. Plus particulièrement, les orifices d'assemblage 1037, 2037 des deuxièmes secteurs angulaires 1036, 2036 d'un ensemble 1, 2 sont en correspondance des orifices d'assemblage 1037, 2037 des deuxièmes secteurs angulaires 1036, 2036 de l'autre ensemble 1, 2.

Selon ce premier mode de réalisation de l'invention, le dispositif d'assemblage 3 comprend en outre chacun des rivets 1007, tels que décrits précédemment. Plus particulièrement, le dispositif d'assemblage 3 comprend chaque paire de deuxièmes secteurs angulaires 1036, 2036 et chaque rivet 1007 destiné à coopérer avec ladite paire.

Dans ce premier mode de réalisation, on comprendra que les portes-disques extérieurs 106, 206 des ensembles 1, 2 sont solidarisés l'un à l'autre par l'intermédiaire de leur organe de réaction 103, 203 respectif.

En variante de l'invention, chacun des orifices d'assemblage 1037, 2037 des deuxièmes secteurs angulaires 1036, 2036 sont des trous taraudés configurés pour recevoir chacun une vis d'assemblage.

En variante, les deuxièmes secteurs angulaires 1036, 2036 de chaque première partie 103A, 203A et leur bord radial extérieur 103E, 203E respectif sont issus de matière. De préférence, les deuxièmes secteurs angulaires 1036, 2036 de chaque première partie 103A, 203A sont rapportés sur leur bord périphérique 1001, 2001 respectif.

Selon une variante particulière de l'invention, les organes de réaction 103, 203 des ensembles 1, 2 sont formés d'une seule pièce pouvant être obtenue par moulage, par exemple. On comprendra que, dans ce cas, la pièce obtenue par moulage est formant les organes de réaction peut être usinée à la cote, de sorte à être configurée en dimension avec le mécanisme d'embrayage 10.

Selon un deuxième mode de réalisation illustré aux figures 5 et 6, et de façon identique au premier mode de réalisation décrit ultérieurement, l'organe de réaction 103, 203 de chaque ensemble 1, 2 s'étend en partie radialement au-delà de la cavité Ci, C2 respective du porte-disques extérieur 106, 206 de l'ensemble 1, 2 correspondant.

Les organes de réaction 103, 203 de ce troisième mode de réalisation sont similaires à ceux du deuxième mode de réalisation. Les organes de réaction 103, 203 sont notamment rapportés sur les porte-disques extérieur 106, 206 des premier et deuxième embrayages 100, 200.

De la même façon, chaque organe de réaction 103, 203 comprend une première partie 103A, 203A s'étendant de façon radiale principalement à l'extérieur de la cavité Ci, C2, soit au-delà du bord périphérique 1001, 2001 du porte-disques extérieur 106, 206 correspondant, et une deuxième partie 103B, 203B située à l'intérieur de la cavité Ci, C2, soit à l'intérieur par rapport au bord périphérique 1001, 2001 du porte-disques extérieur 106, 206 correspondant. On comprendra que les premières parties 103A, 203A et les deuxièmes parties 103B, 203B sont dans une configuration identique à celle du premier mode de réalisation.

De la même façon que dans le premier mode de réalisation, les bords périphériques 1001, 2001 des ensembles 1, 2 sont disposés de sorte à être en regard l'un de l'autre, plus particulièrement, les bords périphériques 1001, 2001 des ensembles 1, 2 sont symétriques l'un par rapport à l'autre.

Les organes de réaction 103, 203 sont solidarisés à leurs porte-disques extérieurs 106, 206 respectifs de façon identique au premier mode de réalisation décrit précédemment.

On comprendra que les variantes envisagées dans le premier mode de réalisation peuvent être appliquées à ce deuxième mode de réalisation.

De façon identique au premier mode de réalisation, pour assembler les ensembles 1, 2 l'un à l'autre, la première partie 103A de l'organe de réaction 103 d'un ensemble 1 est agencée pour coopérer avec la première partie 203A de l'organe de réaction 203 de l'autre ensemble 2. De la même façon, les organes de réaction 103, 203 sont liés l'un à l'autre par l'intermédiaire de leurs deuxièmes secteurs angulaires 1036, 2036 respectifs.

Ainsi, de façon similaire au premier mode de réalisation, on comprendra que les portes-disques extérieurs 106, 206 des ensembles 1, 2 sont solidarisés l'un à l'autre par l'intermédiaire de leur organe de réaction 103, 203. Toutefois, contrairement au premier mode de réalisation, dans ce deuxième mode de réalisation les portes-disques extérieurs 106, 206 des ensembles 1, 2 sont, de plus, solidarisés l'un à l'autre par un contact direct l'un avec l'autre.

Tel qu'illustré aux figures 5 et 6, pour réaliser ce contact direct, le porte-disques extérieur 106, 206 de chaque ensemble 1, 2 comprend des deuxièmes extensions 1006, 2006. Les deuxièmes extensions 1006, 2006 de chaque porte-disques extérieur 106, 206 s'étendent au-delà du bord périphérique 1001, 2001 du porte-disques extérieur 106, 206 de l'ensemble 1, 2 correspondant. On comprendra que les deuxièmes extensions 1003, 2003 des portes-disques extérieurs 106, 206 s'étendent par ailleurs depuis les bords périphériques 1001, 2001 respectifs des portes-disques extérieurs 106, 206 correspondants. Telles que représentées, les deuxièmes extensions 1006, 2006 respectives de chaque porte-disques extérieur 106, 206 sont réparties angulairement autour du bord périphérique 1001, 2001 du porte-disques extérieur 106, 206 correspondant. On comprendra que les deuxièmes extensions 1006, 2006 respectives de chaque porte-disques extérieur 106, 206 sont régulièrement réparties angulairement autour de l'axe O.

Chaque deuxième extension 1006, 2006 comprend une première portion 1006A, 2006A et une deuxième portion 1006B, 2006B agencées en vue d'assembler les ensembles 1, 2 l'un à l'autre. On notera que la deuxième portion 1006B, 2006B de chaque deuxième extension 1006, 2006 est consécutive à la première portion 1006A, 2006A de la même deuxième extension 1006, 2006. En d'autres termes, la première portion 1006A, 2006A et la deuxième portion 1006B, 2006B d'une même deuxième extension 1006, 2006 partage un même bord. Telle que représentée, la première portion 1006A, 2006A de chaque deuxième extension 1006B, 2006B d'un ensemble 1, 2 s'étend axialement, depuis le bord périphérique 1001, 2001, en direction d'une première portion 1006A, 2006A d'une deuxième extension 1006B, 2006B de l'autre ensemble 1, 2. En outre, la première partie 103A, 203A de l'organe de réaction 103, 203 de chaque ensemble 1, 2 est en appui radial par son bord radial extérieur 103E, 203E contre chacune des premières portions 1006A, 2006A des deuxièmes extensions 1006, 2006 du porte-disques extérieur 106, 206 du même ensemble 1, 2. La deuxième portion 1006B, 2006B de chaque deuxième extension 1006, 2006 s'étend radialement vers l'extérieur depuis la première portion 1006A, 2006A de la même deuxième extension 1006, 2006.

On comprendra que les deuxièmes extensions 1006, 2006 sont distinctes des premières extensions 1003, 2003. Ainsi, le bord périphérique 1001, 2001 du porte-disques extérieur 106, 206 de chaque ensemble 1, 2 comprend, à la fois, une pluralité de premières extensions 1003, 2003 et une pluralité de deuxièmes extensions 1006, 2006. Selon ce deuxième mode de réalisation, les premières extensions 1003, 2003 d'un ensemble 1, 2 sont réparties angulairement autour de l'axe O en alternance avec les deuxièmes extensions 1006, 2006 du même ensemble 1, 2.

On comprendra également que les deuxièmes extensions 1006, 2006 de chaque porte-disques 106, 206 s'étendent radialement à l'extérieur de la cavité Ci, C2 de leur ensemble 1, 2 respectif.

Tel qu'illustré aux figures 5 ou 6, le porte-disques extérieur 106 de l'ensemble 1 formant le premier embrayage 100 est agencé pour coopérer avec le porte-disques extérieur 206 de l'ensemble 2 formant le deuxième embrayage 200. Plus particulièrement, les deuxièmes extensions 1006 du porte-disques extérieur 106 de l'ensemble 1 formant le premier embrayage 100 sont agencées pour coopérer avec les deuxièmes extensions 2006 du porte-disques extérieur 206 de l'ensemble 2 formant le deuxième embrayage 200. On comprendra alors que, dans cette configuration, les deux ensembles 1, 2 sont assemblés l'un à l'autre, à la fois, à l'aide de leur organe de réaction 103, 203 respectif et à l'aide de leur porte-disques extérieur 106, 206 respectif.

On notera également que les deuxièmes portions 1006B, 2006B des deuxièmes extensions 1006, 2006 d'un porte-disques extérieur 106, 206 d'un ensemble 1, 2 sont configurées pour être en regard des deuxièmes portions 1006B, 2006B des deuxièmes extensions 1006, 2006 du porte-disques extérieur 106, 206 de l'autre ensemble 1, 2. Plus particulièrement, les deuxièmes portions 1006B, 2006B des deuxièmes extensions 1036, 2036 d'un porte-disques extérieur 106, 206 d'un ensemble 1, 2 sont configurées pour être en appui axial contre les deuxièmes portions 1006B, 2006B des deuxièmes extensions 1006, 2006 du porte-disques extérieur 106, 206 de l'autre ensemble 1, 2.

A titre d'exemple, huit deuxièmes extensions 1006 du porte-disques extérieur 106 de l'ensemble 1 formant le premier embrayage 100 peut être configurées pour coopérer, par leurs deuxièmes portions 1006B, avec huit deuxièmes extensions 2006 du porte-disques extérieur 206 de l'ensemble 2 formant le deuxième embrayage 200 à l'aide de leurs deuxièmes portions 2006B.

Selon ce deuxième mode de réalisation de l'invention, le dispositif d'assemblage 3 comprend en outre chaque paire de deuxièmes extensions 1006, 2006 constituée par une deuxième extension 1006 du porte-disques extérieur 106 de l'ensemble 1 formant le premier embrayage 100 en regard d'une deuxième extension 2006 du porte-disques extérieur 206 de l'ensemble 2 formant le deuxième embrayage 200.

Par paire de deuxièmes extensions 1006, 2006, un rivet 1008 est destiné à traverser un orifice d'assemblage 1038, 2038 formé dans une deuxième portion 1006B, 2006B d'une deuxième extension 1006, 2006 du porte-disques extérieur 106, 206 d'un ensemble 1, 2 et à traverser un orifice d'assemblage 1038, 2038 formé dans une deuxième portion 1006B, 2006B d'une deuxième extension 1006, 2006 du porte-disques extérieur 106, 206 de l'autre ensemble 1, 2. On comprendra que les orifices d'assemblage 1038, 2038 formés dans les deuxièmes portions 1006B, 2006B des deuxièmes extensions 1006, 2006 du porte-disques extérieur 106, 206 d'un ensemble 1, 2 sont en correspondance des orifices d'assemblage 1038, 203 formés dans les deuxièmes portions 1006B, 2006B des deuxièmes extensions 1006, 2006 du porte-disques extérieur 106, 206 de l'autre ensemble 1, 2.

Le dispositif d'assemblage 3 permet alors de compléter l'assemblage des ensembles 1, 2 l'un à l'autre par l'intermédiaire du porte-disques extérieur 106, 206 de chaque ensemble 1, 2, à l'aide de chacun des rivets 1008 assurant cette configuration d'assemblage et décrits précédemment dans ce deuxième mode de réalisation.

On comprendra que, à l'état monté, les deuxièmes extensions 1006, 2006 d'un ensemble 1, 2 sont en regard des deuxièmes extensions 1006, 2006 de l'autre ensemble 1, 2. Plus particulièrement, les orifices d'assemblage 1038, 2038 des deuxièmes portions 1006B, 2006B des deuxièmes extensions 1006, 2006 d'un ensemble 1, 2 sont en correspondance des orifices d'assemblage 1038, 2038 des deuxièmes extensions 1006, 2006 de l'autre ensemble 1, 2.

Selon ce deuxième mode de réalisation de l'invention, le dispositif d'assemblage 3 comprend en outre chacun des rivets 1008, tels que décrits précédemment et participant à l'assemblage des portes-disques extérieurs 106, 206 l'un à l'autre. Plus particulièrement, le dispositif d'assemblage 3 comprend chaque paire de deuxièmes extensions 1006, 2006 et chaque rivet 1008 destiné à coopérer avec ladite paire.

Dans ce deuxième mode de réalisation, on comprendra que les ensembles 1, 2 sont solidarisés l'un à l'autre par l'intermédiaire de leur organe de réaction 103, 203 respectif et par l'intermédiaire de leur porte-disques extérieur 106, 206 respectif.

En variante de l'invention, chacun des orifices d'assemblage 1038, 2038 des deuxièmes portions 1006B, 2006B des deuxièmes extensions 1006, 2006 sont des trous taraudés configurés pour recevoir chacun une vis d'assemblage.

En variante, les deuxièmes extensions 1006, 2006 de chaque porte-disques extérieur 106, 206 et leur bord radial extérieur 103E, 203E respectif sont issus de matière. De préférence, les deuxièmes extensions 1006, 2006 de chaque porte-disques extérieur 106, 206 sont rapportées sur leur bord périphérique 1001, 2001 respectif.

Selon un troisième mode de réalisation illustré à la figure 7, et de façon identique aux premier et deuxième modes de réalisation décrits ultérieurement, l'organe de réaction 103, 203 de chaque ensemble 1, 2 s'étend en partie radialement au-delà de la cavité Ci, C2 respective du porte-disques extérieur 106, 206 de l'ensemble 1, 2 correspondant.

Les organes de réaction 103, 203 de ce troisième mode de réalisation sont similaires à ceux du premier et deuxième mode de réalisation. Les organes de réaction 103, 203 sont notamment rapportés sur les porte-disques extérieur 106, 206 des premier et deuxième embrayages 100, 200.

De la même façon, chaque organe de réaction 103, 203 comprend une première partie 103A, 203A s'étendant de façon radiale principalement à l'extérieur de la cavité C1, C2, soit au-delà du bord périphérique 1001, 2001 du porte-disques extérieur 106, 206 correspondant, et une deuxième partie 103B, 203B située à l'intérieur de la cavité C1, C2, soit à l'intérieur par rapport au bord périphérique 1001, 2001 du porte-disques extérieur 106, 206 correspondant. On comprendra que les premières parties 103A, 203A et les deuxièmes parties 103B, 203B sont dans une configuration identique à celle du premier ou du deuxième mode de réalisation.

De la même façon que dans le premier et deuxième modes de réalisation, les bords périphériques 1001, 2001 des ensembles 1, 2 sont disposés de sorte à être en regard l'un de l'autre, plus particulièrement, les bords périphériques 1001, 2001 des ensembles 1, 2 sont symétriques l'un par rapport à l'autre.

Les organes de réaction 103, 203 sont solidarisés à leurs porte-disques extérieurs 106, 206 respectifs de façon identique aux premier et deuxième modes de réalisation décrits précédemment.

De la même façon, on comprendra que les variantes envisagées dans le premier mode de réalisation peuvent être appliquées à ce troisième mode de réalisation.

De façon identique aux premier et deuxième modes de réalisation, pour assembler les ensembles 1, 2 l'un à l'autre, la première partie 103A de l'organe de réaction 103 d'un ensemble 1 est agencée pour coopérer avec la première partie 203A de l'organe de réaction 203 de l'autre ensemble 2. De la même façon, les organes de réaction 103, 203 sont liés l'un à l'autre par l'intermédiaire de leurs deuxièmes secteurs angulaires respectifs.

Ainsi, de façon similaire aux premier et deuxième modes de réalisation, on comprendra que les portes-disques extérieurs 106, 206 des ensembles 1, 2 sont solidarisés l'un à l'autre par l'intermédiaire de leur organe de réaction 103, 203. Toutefois, contrairement au deuxième mode de réalisation, dans ce troisième mode de réalisation un porte-disques extérieur 106, 206 d'un ensemble 1, 2 est, de plus, solidarisé par un contact direct avec l'organe de réaction 103, 203 de l'autre ensemble 1, 2.

Pour solidariser un porte-disques extérieur 106, 206 d'un ensemble 1, 2 à un organe de réaction 103, 203 de l'autre ensemble 1, 2, le porte-disques extérieur 106, 206 d'un ensemble 1, 2 comprend des deuxièmes extensions 1006, 2006, telles que décrites dans le troisième mode de réalisation détaillé précédemment, et destinées à coopérer avec d'autres deuxièmes secteurs angulaires 1036, 2036 de l'organe de réaction 103, 203 de l'autre ensemble 1, 2, tels que décrits dans le deuxième mode de réalisation détaillé précédemment.

On comprendra également que les deuxièmes secteurs angulaires 1036, 2036 d'un organe de réaction 103, 203 d'un ensemble 1, 2 destinés à coopérer avec les deuxièmes extensions 1006, 2006 du porte-disques 106, 206 de l'autre ensemble 1, 2 sont distincts des deuxièmes secteurs angulaires 1036, 2036 d'un organe de réaction 103, 203 d'un ensemble 1, 2 destinés à coopérer avec les deuxièmes secteurs angulaires 1036, 2036 d'un organe de réaction 103, 203 de l'autre ensemble 1, 2.

Tel qu'illustré à la figure 7, l'organe de réaction 103 de l'ensemble 1 formant le premier embrayage 100 est agencé pour coopérer avec le porte-disques extérieur 206 de l'ensemble 2 formant le deuxième embrayage 200. Plus particulièrement, des deuxièmes secteurs angulaires 1036 de l'organe de réaction 103 de l'ensemble 1 formant le premier embrayage 100 sont agencés pour coopérer avec des deuxièmes extensions 2006 du porte-disques extérieur 106 de l'ensemble 2 formant le deuxième embrayage 200. On comprendra alors que, dans cette configuration, les deux ensembles 1, 2 sont assemblés l'un à l'autre, à la fois, à l'aide de leur organe de réaction 103, 203 respectif et à l'aide d'un porte-disques extérieur 106 d'un ensemble 1 coopérant avec l'organe de réaction 203 de l'autre ensemble 2.

On notera également que les deuxièmes portions 1006B, 2006B des deuxièmes extensions 1006, 2006 d'un porte-disques extérieur 106, 206 d'un ensemble 1, 2 assurant l'assemblage à l'organe de réaction 103, 203 de l'autre ensemble 1, 2 sont configurées pour être en regard des deuxièmes secteurs angulaires 1036, 2036 de l'organe de réaction 103, 203 de l'autre ensemble 1, 2 assurant ce même assemblage. Plus particulièrement, ces deuxièmes portions 1006B, 2006B de ces deuxièmes extensions 1036, 2036 sont configurées pour être en appui axial contre ces deuxièmes secteurs angulaires 1036, 2036.

A titre d'exemple, huit deuxièmes secteurs angulaires 1036 de l'organe de réaction 103 de l'ensemble 1 formant le premier embrayage 100 peuvent être configurés pour coopérer avec huit deuxièmes extensions 2006 du porte-disques extérieur 206 de l'ensemble 2 formant le deuxième embrayage 200 à l'aide de leurs deuxièmes portions 2006B.

Selon ce troisième mode de réalisation de l'invention, le dispositif d'assemblage 3 comprend en outre chaque paire de deuxième secteur angulaire 1036, 2036 d'un ensemble 1, 2 et deuxième extension 1006, 2006 de l'autre ensemble 1, 2 constituée par un deuxième secteur angulaire 1036 de l'organe de réaction 103, d'un ensemble 1 formant le premier embrayage 100 en regard d'une deuxième extension 2006 du porte-disques extérieur 206 de l'ensemble 2 formant le deuxième embrayage 200.

Par paire de deuxième secteur angulaire 1036, 2036 d'un ensemble 1, 2 et deuxième extension 1006, 2006 de l'autre ensemble 1, 2, un rivet 1009 est destiné à traverser un orifice d'assemblage 1037, 2037 formé dans un deuxième secteur angulaire 1036, 2036 de la première partie 103A, 203A de l'organe de réaction 103, 203 d'un ensemble 1, 2 et à traverser un orifice d'assemblage 1038, 2038 formé dans une deuxième portion 1006B, 2006B d'une deuxième extension 1006, 2006 du porte-disques extérieur 106, 206 de l'autre ensemble 1, 2. Dans ces paires, telles que décrites dans ce troisième mode de réalisation, on comprendra que les orifices d'assemblage 1037, 2037 formés dans les deuxièmes secteurs angulaires 1036, 2036 de la première partie 103A, 203A de l'organe de réaction 103, 203 d'un ensemble 1, 2 sont en correspondance des orifices d'assemblage 1038, 203 formés dans les deuxièmes portions 1006B, 2006B des deuxièmes extensions 1006, 2006 du porte-disques extérieur 106, 206 de l'autre ensemble 1, 2.

Le dispositif d'assemblage 3 permet alors de compléter l'assemblage des ensembles 1, 2 l'un à l'autre par l'intermédiaire du porte-disques extérieur 106, 206 d'un ensemble 1, 2 et de l'organe de réaction 103, 203 de l'autre ensemble 1, 2, à l'aide de chacun des rivets 1009 assurant cette configuration d'assemblage et décrits précédemment dans ce troisième mode de réalisation.

A l'état monté, les deuxièmes secteurs angulaires 1036, 2036 d'un ensemble 1, 2 sont en regard des deuxièmes extensions 1006, 2006 de l'autre ensemble 1, 2. Plus particulièrement, les orifices d'assemblage 1037, 2037 des deuxièmes secteurs angulaires 1036, 2036 d'un ensemble 1, 2 sont en correspondance des orifices d'assemblage 1038, 2038 des deuxièmes extensions 1006, 2006 de l'autre ensemble 1, 2.

Selon ce troisième mode de réalisation de l'invention, le dispositif d'assemblage 3 comprend en outre chacun des rivets 1009, tels que décrits précédemment et participant à l'assemblage d'un porte-disques extérieur 106, 206 d'un ensemble 1, 2 avec l'organe de réaction 103, 203 de l'autre l'ensemble 1, 2. Plus particulièrement, le dispositif d'assemblage 3 comprend chaque paire de deuxième secteur angulaire 1036, 2036 d'un ensemble 1, 2 et deuxième extension 1006, 2006 de l'autre ensemble 1, 2 et chaque rivet 1009 destiné à coopérer avec ladite paire.

Dans ce troisième mode de réalisation, on comprendra que les ensembles 1, 2 sont solidarisés l'un à l'autre par l'intermédiaire de leur organe de réaction 103, 203 respectif et par l'intermédiaire d'un porte-disques extérieur 106, 206 d'un ensemble 1, 2 coopérant avec l'organe de réaction 103, 203 de l'autre ensemble 1, 2.

En variante de l'invention, chacun des orifices d'assemblage 1037, 2037 des deuxièmes secteurs angulaires 1036, 2036 d'un ensemble 1, 2 et chacun des orifices d'assemblage 1038, 2038 des deuxièmes portions 1006B, 2006B des deuxièmes extensions 1006, 2006 configurés pour coopérer ensemble sont des trous taraudés configurés pour recevoir chacun une vis d'assemblage.

Selon une variante particulière de ce troisième mode de réalisation décrit en figure 8, le porte-disques extérieur 106, 206 de chaque ensemble 1, 2 est solidarisé à un organe de réaction 103, 203 de l'autre ensemble 1, 2. Pour cela, le porte-disques extérieur 106, 206 de chaque ensemble 1, 2 comprend d'autres deuxièmes extensions 1006, 2006, telles que décrites dans le deuxième mode de réalisation détaillé précédemment, et destinées à coopérer avec d'autres deuxièmes secteurs angulaires 1036, 2036 de l'organe de réaction 103, 203 de l'autre ensemble 1, 2, tels que décrits dans le deuxième mode de réalisation détaillé précédemment.

On comprendra que les deuxièmes extensions 1006, 2006 d'un porte-disques 106, 206 de chaque ensemble 1, 2 destinées à coopérer avec les deuxièmes secteurs angulaires 1036, 2036 de l'organe de réaction 103, 203 de l'autre ensemble 1, 2 sont distincts des deuxièmes extensions 1006, 2006 d'un porte-disques 106, 206 d'un ensemble 1, 2 destinées à coopérer avec les deuxièmes extensions 1006, 2006 du porte-disques 106, 206 de l'autre ensemble 1, 2.

On comprendra également que les deuxièmes secteurs angulaires 1036, 2036 de chaque organe de réaction 103, 203 d'un ensemble 1, 2 destinés à coopérer avec les deuxièmes extensions 1006, 2006 du porte-disques 106, 206 de l'autre ensemble 1, 2 sont distincts des deuxièmes secteurs angulaires 1036, 2036 d'un organe de réaction 103, 203 d'un ensemble 1, 2 destinés à coopérer avec les deuxièmes secteurs angulaires 1036, 2036 d'un organe de réaction 103, 203 de l'autre ensemble 1, 2.

Tel qu'illustré à la figure 8, l'organe de réaction 103 de l'ensemble 1 formant le premier embrayage 100 est agencé pour coopérer avec le porte-disques extérieur 206 de l'ensemble 2 formant le deuxième embrayage 200 et l'organe de réaction 203 de l'ensemble 2 formant le deuxième embrayage 200 est agencé pour coopérer avec le porte-disques extérieur 106 de l'ensemble 1 formant le premier embrayage 100. Plus particulièrement, des deuxièmes secteurs angulaires 1036 de l'organe de réaction 103 de l'ensemble 1 formant le premier embrayage 100 sont agencés pour coopérer avec des deuxièmes extensions 2006 du porte-disques extérieur 206 de l'ensemble 2 formant le deuxième embrayage 200 et, en alternance, des deuxièmes secteurs angulaires 2036 de l'organe de réaction 203 de l'ensemble 2 formant le deuxième embrayage 200 sont agencés pour coopérer avec des deuxièmes extensions 1006 du porte-disques extérieur 106 de l'ensemble 1 formant le premier embrayage 100. On comprendra alors que, dans cette configuration, les deux ensembles 1, 2 sont assemblés l'un à l'autre, à la fois, à l'aide de leur organe de réaction 103, 203 respectif et à l'aide du porte-disques extérieur 106, 206 de chaque ensemble 1, 2 coopérant avec l'organe de réaction 103, 203 de l'autre ensemble 2.

Par alternance, on comprendra qu'une paire de deuxième secteur angulaire 1036 de l'ensemble 1 formant le premier embrayage 100 et deuxième extension 2006 de l'autre ensemble 2 formant le deuxième embrayage 200 est disposée angulairement autour de l'axe O en alternance avec une paire de deuxième secteur angulaire 2036 de l'ensemble 2 formant le deuxième embrayage 200 et deuxième extension 1006 de l'autre ensemble 1 formant le premier embrayage 100.

Selon un quatrième mode de réalisation illustré à la figure 9 et de façon identique aux premier à troisième modes de réalisation décrits ultérieurement, l'organe de réaction 103, 203 de chaque ensemble 1, 2 s'étend en partie radialement au-delà de la cavité C1, C2 respective du porte-disques extérieur 106, 206 de l'ensemble 1, 2 correspondant.

Les organes de réaction 103, 203 de ce quatrième mode de réalisation sont similaires à ceux du premier à troisième modes de réalisation. Les organes de réaction 103, 203 sont notamment rapportés sur les porte-disques extérieur 106, 206 des premier et deuxième embrayages 100, 200.

De la même façon, chaque organe de réaction 103, 203 comprend une première partie 103A, 203A s'étendant de façon radiale principalement à l'extérieur de la cavité C1, C2, soit au-delà du bord périphérique 1001, 2001 du porte-disques extérieur 106, 206 correspondant, et une deuxième partie 103B, 203B située à l'intérieur de la cavité C1, C2, soit à l'intérieur par rapport au bord périphérique 1001, 2001 du porte-disques extérieur 106, 206 correspondant. On comprendra que les premières parties 103A, 203A et les deuxièmes parties 103B, 203B sont dans une configuration identique à celle du premier ou du deuxième mode de réalisation.

De la même façon que dans le premier à troisième modes de réalisation, les bords périphériques 1001, 2001 des ensembles 1, 2 sont disposés de sorte à être en regard l'un de l'autre, plus particulièrement, les bords périphériques 1001, 2001 des ensembles 1, 2 sont symétriques l'un par rapport à l'autre.

Les organes de réaction 103, 203 sont solidarisés à leurs porte-disques extérieurs 106, 206 respectifs de façon similaire au premier à troisième modes de réalisation décrits précédemment.

De la même façon, on comprendra que les variantes envisagées dans le premier mode de réalisation peuvent être appliquées à ce quatrième mode de réalisation.

De façon identique au premier à troisième modes de réalisation, pour assembler les ensembles 1, 2 l'un à l'autre, la première partie 103A de l'organe de réaction 103 d'un ensemble 1 est agencée pour coopérer avec la première partie 203A de l'organe de réaction 203 de l'autre ensemble 2. De la même façon, les organes de réaction 103, 203 sont liés l'un à l'autre par l'intermédiaire de leurs deuxièmes secteurs angulaires respectifs.

Ainsi, de façon similaire au premier à troisième modes de réalisation, on comprendra que les portes-disques extérieurs 106, 206 des ensembles 1, 2 sont solidarisés l'un à l'autre par l'intermédiaire de leur organe de réaction 103, 203. Tels que décrits de façon détaillée dans le deuxième mode de réalisation, les premiers secteurs angulaires 1033, 2033 et les premières extensions 1003, 2003 d'un ensemble 1, 2 sont en regard des premiers secteurs angulaires 1033, 2033 et des premières extensions 1003, 2003 de l'autre ensemble 1, 2. Ainsi, chaque paire de premier secteur angulaire 1033, 2033 et première extension 1003, 2003 d'un même ensemble 1, 2 est configuré pour être disposé en regard d'une paire de premier secteur angulaire 1033, 2033 et première extension 1003, 2003 de l'autre ensemble 1, 2.

Toutefois en comparaison des modes de réalisation précédemment décrits, dans ce quatrième mode de réalisation, en alternance avec la configuration des premières extensions 1003, 2003 détaillée dans le premier mode de réalisation, une paire de premier secteur angulaire 1033, 2033 et première extension 1003, 2003 d'un ensemble 1, 2 et une paire de premier secteur angulaire 1033, 2033 et première extension 1003, 2003 de l'autre ensemble 1, 2 sont configurées pour recevoir un même rivet 1010. Ainsi, un même rivet 1010 est destiné à traverser, dans un même ensemble 1, 2, un orifice d'assemblage 1034, 2034 formé dans un premier secteur angulaire 1033, 2033 de la première partie 103A, 203A de l'organe de réaction 103, 203 et un trou d'assemblage 1004, 2004 formé dans une première extension 1003, 2003 du porte-disques extérieur 106, 206, puis à traverser, dans l'autre ensemble 1, 2 un orifice d'assemblage 1034, 2034 formé dans un premier secteur angulaire 1033, 2033 de la première partie 103A, 203A de l'organe de réaction 103, 203 et un trou d'assemblage 1004, 2004 formé dans une première extension 1003, 2003 du porte-disques extérieur 106, 206.

Dans cette configuration, le rivet 1010 permet de solidariser par un contact direct le porte-disques 106, 206 et les organes de réaction 103, 203 de chaque ensemble 1, 2.

On comprendra que, pour assurer un bon assemblage des ensembles 1, 2 l'un à l'autre, chaque rivet 1010 décrit dans ce cinquième mode de réalisation est embouti pour s'étendre radialement au-delà des trous d'assemblage 1004, 2004 de sorte à maintenir serrés les premiers secteurs angulaires 1033, 2033 et premières extensions 1003, 2003 de chaque paire, telle que décrite précédemment dans ce quatrième mode de réalisation. On notera également que les rivets 1010 comprennent un épaulement en leur centre configuré et dimensionné pour venir en appui axial contre les premiers secteurs angulaires 1033, 2033 d'une même paire telle que décrite dans ce quatrième mode de réalisation.

De façon générale aux modes de réalisation, on comprendra que les paires des premières et/ou deuxièmes extensions décrites et/ou les premiers et/ou deuxièmes secteurs angulaires décrits sont réparti(e)s en alternance angulairement autour de l'axe O.

Bien sûr, l'invention n'est pas limitée aux exemples qui viennent d'être décrits et de nombreux aménagements peuvent être apportés à ces exemples sans sortir du cadre des revendications. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Mécanisme d'embrayage (10) configuré pour être entraîné en rotation autour d'un axe (O) et comprenant deux ensembles (1, 2), chaque ensemble (1, 2) comprenant au moins :
- un porte-disques extérieur (106, 206) délimitant par l'extérieur une cavité (C1, C2),
- un embrayage (100, 200) comprenant un empilement de disques d'accouplement (101, 201) et de disques de friction (102, 202), l'empilement étant logé dans la cavité (C1, C2) et configuré pour être entraîné en rotation autour de l'axe (O),
- un organe de réaction (103, 203) du porte-disques extérieur (106, 206) configuré pour permettre une compression des disques d'accouplement (101, 201) contre les disques de friction (102, 202) dans une position embrayée de l'embrayage (100,200), le mécanisme d'embrayage (10) comprenant au moins un dispositif d'assemblage (3) des deux ensembles (1, 2) l'un à l'autre,
chacun des portes-disques extérieurs (106, 206) des ensembles (1, 2) comprend au moins une première extension (1003, 2003) s'étendant radialement vers l'extérieur au-delà d'un bord périphérique (1001, 2001) du porte-disques extérieur (106, 206) correspondant, au moins la première extension (1003, 2003) d'un porte-disques extérieur (106, 206) étant en regard d'au moins la première extension (1003, 2003) de l'autre porte-disques extérieur (106, 206), le dispositif d'assemblage (3) comprenant au moins la première extension (1003, 2003) correspondante de chaque porte-disques extérieur (106, 206),
**caractérisé en ce que** l'organe de réaction (103, 203) d'au moins un ensemble (1, 2) comprend :
- une première partie (103A) s'étendant de façon radiale principalement à l'extérieur de la cavité (C1, C2), soit au-delà du bord périphérique (1001, 2001) du porte-disques extérieur (106, 206) correspondant, et
une deuxième partie (103B) située à l'intérieur de la cavité (C1, C2), soit à l'intérieur par rapport au bord périphérique (1001, 2001) du porte-disques extérieur (106, 206) correspondant.

2. Mécanisme d'embrayage (10) selon la revendication 1, **caractérisé en ce que** le dispositif d'assemblage (3) assure l'assemblage des deux ensembles (1, 2) l'un à l'autre par le porte-disques extérieur (106, 206) de chaque ensemble (1, 2).

3. Mécanisme d'embrayage (10) selon la revendication 2, **caractérisé en ce que** le dispositif d'assemblage (3) comprend au moins un rivet (1005) ou une vis d'assemblage configuré(e) pour passer au travers d'un trou d'assemblage (1004, 2004) formé dans au moins la première extension (1003, 2003) d'au moins un porte-disques extérieur (106, 206).

4. Mécanise d'embrayage selon l'une quelconque des revendications précédentes, **caractérisé en ce que** la deuxième partie (103B) de l'organe de réaction (103, 203) d'au moins un ensemble (1, 2) comprend un bord radial intérieur (1031, 2031) qui s'étend axialement en direction de l'embrayage (100, 200) dudit ensemble (1, 2) correspondant.

5. Mécanisme d'embrayage (10) selon l'une quelconque des revendications précédentes, **caractérisé en ce que** la première partie (103A) d'au moins un organe de réaction (103, 203) comprend un bord radial extérieur (103E, 203E) depuis lequel s'étendent radialement vers l'extérieur des premiers secteurs angulaires (1033, 2033) répartis angulairement autour de l'axe (O), chaque premier secteur angulaire (1033, 2033) de l'organe de réaction (103, 203) correspondant coopérant avec au moins la première extension (1003, 2003) du porte-disques extérieur (106, 206) correspondant.

6. Mécanisme d'embrayage (10) selon l'une quelconque des revendications précédentes, **caractérisé en ce que** la première partie (103A) de l'organe de réaction (103, 203) d'au moins un ensemble (1, 2) est en appui axial contre la première partie (103A) de l'organe de réaction (103, 203) de l'autre ensemble (1, 2).

7. Mécanisme d'embrayage (10) selon l'une quelconque des revendications précédentes, **caractérisé en ce que** au moins un premier secteur angulaire (1033, 2033) de la première partie (103A) de l'organe de réaction (103, 203) d'au moins un ensemble (1, 2) est agencée pour coopérer avec au moins la première extension (1003, 2003) du porte-disques extérieur (106, 206) correspondant, en vue d'assembler l'organe de réaction (103, 203) à son porte-disques extérieur (106, 206) correspondant.

8. Mécanisme d'embrayage (10) selon la revendication précédente, **caractérisé en ce que** le dispositif d'assemblage (3) comprend au moins un rivet (1035, 2035) ou une vis d'assemblage configuré(e) pour passer au travers d'un orifice d'assemblage (1034, 2034) formé dans au moins un premier secteur angulaire (1033, 2033) de la première partie (103A) de l'organe de réaction (103, 203) d'un ensemble (1, 2) et au travers d'un trou d'assemblage formé dans une première extension (1003, 2003) du porte-disques extérieur (106, 206) du même ensemble (1, 2).

9. Mécanisme d'embrayage (10) selon l'une quelconque des revendications précédentes, **caractérisé en ce que** la première partie (103A) de l'organe de réaction (103, 203) d'un ensemble (1, 2) est agencée pour coopérer avec la première partie (103A) de l'organe de réaction (103, 203) de l'autre ensemble (1, 2) pour assembler les ensembles (1, 2) l'un à l'autre, le dispositif d'assemblage (3) comprenant la première partie (103A) de l'organe de réaction (103, 203) de chaque ensemble (1, 2).

10. Mécanisme d'embrayage (10) selon la revendication précédente, **caractérisé en ce que** la première partie (103A) de l'organe de réaction (103, 203) de chaque ensemble (1, 2) comprend des deuxièmes secteurs angulaires (1036, 2036) répartis angulairement autour de l'axe (O) et qui s'étendent radialement vers l'extérieur depuis le bord radial extérieur (103E, 203E), chaque deuxième secteur angulaire (1036, 2036) de l'organe de réaction (103, 203) d'un ensemble (1, 2) coopérant avec un deuxième secteur angulaire (1036, 2036) de l'organe de réaction (103, 203) de l'autre ensemble (1, 2).

11. Mécanisme d'embrayage (10) selon la revendication précédente, **caractérisé en ce que** le dispositif d'assemblage (3) comprend au moins un rivet (1007) ou une vis d'assemblage configuré(e) pour passer au travers d'un orifice d'assemblage formé dans au moins un deuxième secteur angulaire (1036, 2036) de la première partie (103A) de l'organe de réaction (103, 203) d'un ensemble (1, 2) et au travers d'un orifice d'assemblage formé dans au moins un deuxième secteur angulaire (1036, 2036) de la première partie (103A) de l'organe de réaction (103, 203) de l'autre ensemble (1, 2).

12. Mécanisme d'embrayage (10) selon l'une quelconque des revendications 9 à 11, **caractérisé en ce que** la première partie (103A) de l'organe de réaction (103, 203) d'au moins un ensemble (1, 2) est agencée pour coopérer, à la fois, avec la première partie (103A) de l'organe de réaction (103, 203) de l'autre ensemble (1, 2) et avec au moins une première extension (1003, 2003) du porte-disques extérieur (106, 206) de chaque ensemble (1, 2) en vue d'assembler les ensembles l'un à l'autre, le dispositif d'assemblage comprenant la première partie de l'organe de réaction de chaque ensemble et au moins une première extension du porte-disques extérieur de chaque ensemble.

13. Mécanisme d'embrayage (10) selon la revendication précédente, **caractérisé en ce que** le dispositif d'assemblage (3) comprend au moins un rivet (1010) ou une vis d'assemblage configuré(e) pour passer au travers d'un orifice d'assemblage (1034, 2034) formé dans au moins un premier secteur angulaire (1033, 2033) de la première partie (103A) de l'organe de réaction (103, 203) d'un ensemble (1, 2) et au travers d'un orifice d'assemblage (1034, 2034) formé dans au moins un premier secteur angulaire (1033, 2033) de la première partie (103A) de l'organe de réaction (103, 203) de l'autre ensemble (1, 2).

## Patentansprüche

1. Kupplungsmechanismus (10), der so konfiguriert ist, dass er um eine Achse (0) drehbar angetrieben wird, und zwei Anordnungen (1, 2) umfasst, wobei jede Anordnung (1, 2) zumindest Folgendes umfasst:
- einen äußeren Scheibenträger (106, 206), der von außen einen Hohlraum (C1, C2) begrenzt,
- eine Kupplung (100, 200), die einen Stapel von Kupplungsscheiben (101, 201) und von Reibscheiben (102, 202) umfasst, wobei der Stapel im Hohlraum (C1, C2) untergebracht und so konfiguriert ist, dass er um die Achse (0) drehend angetrieben wird,
- ein Reaktionsorgan (103, 203) des äußeren Scheibenträgers (106, 206), das so konfiguriert ist, dass es in einer eingerückten Stellung der Kupplung (100, 200) eine Kompression der Kupplungsscheiben (101, 201) gegen die Reibscheiben (102, 202) ermöglicht,
wobei der Kupplungsmechanismus (10) zumindest eine Vorrichtung (3) zum Verbinden der beiden Anordnungen (1, 2) miteinander umfasst,
wobei jeder der äußeren Scheibenträger (106, 206) der Anordnungen (1, 2) zumindest eine erste Verlängerung (1003, 2003) umfasst, die sich radial nach außen über eine Umfangskante (1001, 2001) des entsprechenden äußeren Scheibenträgers (106, 206) hinaus erstreckt, wobei zumindest die erste Verlängerung (1003, 2003) eines äußeren Scheibenträgers (106, 206) zumindest der ersten Verlängerung (1003, 2003) des anderen äußeren Scheibenträgers (106, 206) gegenüberliegt, wobei die Verbindungsvorrichtung (3) zumindest die entsprechende erste Verlängerung (1003, 2003) jedes äußeren Scheibenträgers (106, 206) umfasst,
**dadurch gekennzeichnet, dass** das Reaktionsorgan (103, 203) zumindest einer Anordnung (1, 2) Folgendes umfasst:
- einen ersten Abschnitt (103A), der sich radial im Wesentlichen außerhalb des Hohlraums (C1, C2) bzw. über die Umfangskante (1001, 2001) des entsprechenden äußeren Scheibenträgers (106, 206) hinaus erstreckt, und
einen zweiten Abschnitt (103B) der sich innerhalb des Hohlraums (C1, C2) bzw. in Bezug auf die Umfangskante (1001, 2001) des entsprechenden äußeren Scheibenträgers (106, 206) innen befindet.

2. Kupplungsmechanismus (10) nach Anspruch 1, **dadurch gekennzeichnet, dass** die Verbindungsvorrichtung (3) die Verbindung der beiden Anordnungen (1, 2) über den äußeren Scheibenträger (106, 206) jeder Anordnung (1, 2) gewährleistet.

3. Kupplungsmechanismus (10) nach Anspruch 2, **dadurch gekennzeichnet, dass** die Verbindungsvorrichtung (3) zumindest einen Verbindungsniet (1005) oder eine Verbindungsschraube umfasst, der bzw. die so konfiguriert ist, dass er bzw. sie durch ein Verbindungsloch (1004, 2004) verläuft, das in zumindest einer ersten Verlängerung (1003, 2003) zumindest eines äußeren Scheibenträgers (106, 206) ausgebildet ist.

4. Kupplungsmechanismus nach einem der vorangehenden Ansprüche, **dadurch gekennzeichnet, dass** der zweite Abschnitt (103B) des Reaktionsorgans (103, 203) zumindest einer Anordnung (1, 2) einen inneren radialen Rand (1031, 2031) umfasst, der sich in Richtung der Kupplung (100, 200) der entsprechenden Anordnung (1, 2) erstreckt.

5. Kupplungsmechanismus (10) nach einem der vorangehenden Ansprüche, **dadurch gekennzeichnet, dass** der erste Abschnitt (103A) zumindest eines Reaktionsorgans (103, 203) einen äußeren radialen Rand (103E, 203E) umfasst, von dem aus sich erste Winkelsektoren (1033, 2033), die winkelmäßig um die Achse (0) verteilt sind, radial nach außen erstrecken, wobei jeder erste Winkelsektor (1033, 2033) des entsprechenden Reaktionsorgans (103, 203) mit zumindest der ersten Verlängerung (1003, 2003) des entsprechenden äußeren Scheibenträgers (106, 206) zusammenwirkt.

6. Kupplungsmechanismus (10) nach einem der vorangehenden Ansprüche, **dadurch gekennzeichnet, dass** der erste Abschnitt (103A) des Reaktionsorgans (103, 203) zumindest einer Anordnung (1, 2) axial am ersten Abschnitt (103A) des Reaktionsorgans (103, 203) der anderen Anordnung (1, 2) anliegt.

7. Kupplungsmechanismus (10) nach einem der vorangehenden Ansprüche, **dadurch gekennzeichnet, dass** zumindest ein erster Winkelsektor (1033, 2033) des ersten Abschnitts (103A) des Reaktionsorgans (103, 203) zumindest einer Anordnung (1, 2) so angeordnet ist, dass der mit zumindest der ersten Verlängerung (1003, 2003) des entsprechenden äußeren Scheibenträgers (106, 206) zusammenwirkt, um das Reaktionsorgan (103, 203) mit seinem entsprechenden äußeren Scheibenträger (106, 206) zu verbinden.

8. Kupplungsmechanismus (10) nach dem vorangehenden Anspruch, **dadurch gekennzeichnet, dass** die Verbindungsvorrichtung (3) zumindest einen Verbindungsniet (1035, 2035) oder eine Verbindungsschraube umfasst, der bzw. die so konfiguriert ist, dass er bzw. sie durch eine Verbindungsöffnung (1034, 2034), die in zumindest einem ersten Winkelsektor (1033, 2033) des ersten Abschnitts (103A) des Reaktionsorgans (103, 203) einer Anordnung (1, 2) ausgebildet ist, und durch ein Verbindungsloch, das in einer ersten Verlängerung (1003, 2003) des äußeren Scheibenträgers (106, 206) derselben Anordnung (1, 2) ausgebildet ist, verläuft.

9. Kupplungsmechanismus (10) nach einem der vorangehenden Ansprüche, **dadurch gekennzeichnet, dass** der erste Abschnitt (103A) des Reaktionsorgans (103, 203) einer Anordnung (1, 2) so angeordnet ist, dass er mit dem ersten Abschnitt (103A) des Reaktionsorgans (103, 203) der anderen Anordnung (1, 2) zusammenwirkt, um die Anordnungen (1, 2) miteinander zu verbinden, wobei die Verbindungsvorrichtung (3) den ersten Abschnitt (103A) des Reaktionsorgans (103, 203) jeder Anordnung (1, 2) umfasst.

10. Kupplungsmechanismus (10) nach dem vorangehenden Anspruch, **dadurch gekennzeichnet, dass** der erste Abschnitt (103A) des Reaktionsorgans (103, 203) jeder Anordnung (1, 2) zweite Winkelsektoren (1036, 2036) umfasst, die winkelmäßig um die Achse (0) verteilt sind und die sich vom äußeren radialen Rand (103E, 203E) radial nach außen erstrecken, wobei jeder zweite Winkelsektor (1036, 2036) des Reaktionsorgans (103, 203) einer Anordnung (1, 2) mit einem zweiten Winkelsektor (1036, 2036) des Reaktionsorgans (103, 203) der anderen Anordnung (1, 2) zusammenwirkt.

11. Kupplungsmechanismus (10) nach dem vorangehenden Anspruch, **dadurch gekennzeichnet, dass** die Verbindungsvorrichtung (3) zumindest einen Verbindungsniet (1007) oder eine Verbindungsschraube umfasst, der bzw. die so konfiguriert ist, dass er bzw. sie durch eine Verbindungsöffnung, die in zumindest einem zweiten Winkelsektor (1036, 2036) des ersten Abschnitts (103A) des Reaktionsorgans (103, 203) einer Anordnung (1, 2) ausgebildet ist, und durch eine Verbindungsöffnung, die in zumindest einem zweiten Winkelsektor (1036, 2036) des ersten Abschnitts (103A) des Reaktionsorgans (103, 203) der anderen Anordnung (1, 2) ausgebildet ist, verläuft.

12. Kupplungsmechanismus (10) nach einem der Ansprüche 9 bis 11, **dadurch gekennzeichnet, dass** der erste Abschnitt (103A) des Reaktionsorgans (103, 203) zumindest einer Anordnung (1, 2) so angeordnet ist, dass er sowohl mit dem ersten Abschnitt (103A) des Reaktionsorgans (103, 203) der anderen Anordnung (1, 2) als auch mit zumindest einer ersten Verlängerung (1003, 2003) des äußeren Scheibenträgers (106, 206) jeder Anordnung (1, 2) zusammenwirkt, um die Anordnungen miteinander zu verbinden, wobei die Verbindungsvorrichtung den ersten Abschnitt des Reaktionsorgans jeder Anordnung und zumindest eine erste Verlängerung des äußeren Scheibenträgers jeder Anordnung umfasst.

13. Kupplungsmechanismus (10) nach dem vorangehenden Anspruch, **dadurch gekennzeichnet, dass** die Verbindungsvorrichtung (3) zumindest einen Verbindungsniet (1010) oder eine Verbindungsschraube umfasst, der bzw. die so konfiguriert sind, dass sie durch eine Verbindungsöffnung (1034, 2034), die in zumindest einem ersten Winkelsektor (1033, 2033) des ersten Abschnitts (103A) des Reaktionsorgans (103, 203) einer Anordnung (1, 2) ausgebildet ist, und durch eine Verbindungsöffnung (1034, 2034), die in zumindest einem ersten Winkelsektor (1033, 2033) des ersten Abschnitts (103A) des Reaktionsorgans (103, 203) der anderen Anordnung (1, 2) ausgebildet ist, verläuft.

## Claims

1. A clutch mechanism (10) configured to be driven in rotation about an axis (0) and comprising two assemblies (1, 2), each assembly (1, 2) comprising at least:
- an outer disk carrier (106, 206) externally delimiting a cavity (C1, C2),
- a clutch (100, 200) comprising a stack of coupling disks (101, 201) and friction disks (102, 202), the stack being housed in the cavity (C1, C2) and configured to be driven in rotation about the axis (O) ,
- a reaction member (103, 203) of the outer disk carrier (106, 206) configured to enable compression of the coupling disks (101, 201) against the friction disks (102, 202) in a clutch engaged position of the clutch (100, 200),
the clutch mechanism (10) comprising at least one device (3) for assembling the two assemblies (1, 2) to one another,
each the outer disk-carriers (106, 206) of the assemblies (1, 2) comprises at least one first extension (1003, 2003) extending radially outwards beyond a peripheral edge (1001, 2001) of the corresponding outer disk carrier (106, 206), at least the first extension (1003, 2003) of one outer disk carrier (106, 206) facing at least the first extension (1003, 2003) of the other outer disk carrier (106, 206), the assembly device (3) comprising at least the corresponding first extension (1003, 2003) of each outer disk carrier (106, 206),
**characterized in that** the reaction member (103, 203) of at least one assembly (1, 2) comprises:
- a first part (103A) extending radially mainly outside the cavity (C1, C2), that is to say beyond the peripheral edge (1001, 2001) of the corresponding outer disk carrier (106, 206), and
- a second part (103B) situated inside the cavity (C1, C2), that is to say inside the peripheral edge (1001, 2001) of the corresponding outer disk carrier (106, 206).

2. The clutch mechanism (10) as claimed in claim 1, **characterized in that** the assembly device (3) assembles the two assemblies (1, 2) to one another by means the outer disk carrier (106, 206) of each assembly (1, 2).

3. The clutch mechanism (10) as claimed in claim 2, **characterized in that** the assembly device (3) comprises at least one rivet (1005) or one assembly screw configured to pass through an assembly hole (1004, 2004) formed in at least the first extension (1003, 2003) of at least one outer disk carrier (106, 206).

4. The clutch mechanism as claimed in any of the preceding claims, **characterized in that** the second part (103B) of the reaction member (103, 203) of at least one assembly (1, 2) comprises an inner radial edge (1031, 2031) that extends axially toward the clutch (100, 200) of said corresponding assembly (1, 2) .

5. The clutch mechanism (10) as claimed in any of the preceding claims, **characterized in that** the first part (103A) of at least one reaction member (103, 203) comprises an outer radial edge (103E, 203E) from which extend radially outwards first angular sectors (1033, 2033) distributed circumferentially around the axis (O), each first angular sector (1033, 2033) of the corresponding reaction member (103, 203) cooperating with at least the first extension (1003, 2003) of the corresponding outer disk carrier (106, 206).

6. The clutch mechanism (10) as claimed in any of the preceding claims, **characterized in that** the first part (103A) of the reaction member (103, 203) of at least one assembly (1, 2) bears axially against the first part (103A) of the reaction member (103, 203) of the other assembly (1, 2).

7. The clutch mechanism (10) as claimed in any of the preceding claims, **characterized in that** at least one first angular sector (1033, 2033) of the first part (103A) of the reaction member (103, 203) of at least one assembly (1, 2) is adapted to cooperate with at least the first extension (1003, 2003) of the corresponding outer disk carrier (106, 206) in order to assemble the reaction member (103, 203) to its corresponding outer disk carrier (106, 206).

8. The clutch mechanism (10) as claimed in the preceding claim, **characterized in that** the assembly device (3) comprises at least a rivet (1035, 2035) or one assembly screw configured to pass through an assembly orifice (1034, 2034) formed in at least one first angular sector (1033, 2033) of the first part (103A) of the reaction member (103, 203) of one assembly (1, 2) and through an assembly hole formed in a first extension (1003, 2003) of the outer disk carrier (106, 206) of the same assembly (1, 2).

9. The clutch mechanism (10) as claimed in any of the preceding claims, **characterized in that** the first part (103A) of the reaction member (103, 203) of one assembly (1, 2) is adapted to cooperate with the first part (103A) of the reaction member (103, 203) of the other assembly (1, 2) in order to assemble the assemblies (1, 2) to one another, the assembly device (3) comprising the first part (103A) of the reaction member (103, 203) of each assembly (1, 2).

10. The clutch mechanism (10) as claimed in the preceding claim, **characterized in that** the first part (103A) of the reaction member (103, 203) of each assembly (1, 2) comprises second angular sectors (1036, 2036) distributed circumferentially around the axis (O) and that extend radially outwards from the outer radial edge (103E, 203E), each second angular sector (1036, 2036) of the reaction member (103, 203) of one assembly (1, 2) cooperating with a second angular sector (1036, 2036) of the reaction member (103, 203) of the other assembly (1, 2).

11. The clutch mechanism (10) as claimed in the preceding claim, **characterized in that** the assembly device (3) comprises at least one rivet (1007) or one assembly screw configured to pass through an assembly orifice formed in at least one second angular sector (1036, 2036) of the first part (103A) of the reaction member (103, 203) of one assembly (1, 2) and through an assembly orifice formed in at least one second angular sector (1036, 2036) of the first part (103A) of the reaction member (103, 203) of the other assembly (1, 2).

12. The clutch mechanism (10) as claimed in any one of claims 9 to 11, **characterized in that** the first part (103A) of the reaction member (103, 203) of at least one assembly (1, 2) is adapted to cooperate both with the first part (103A) of the reaction member (103, 203) of the other assembly (1, 2) and with at least one first extension (1003, 2003) of the outer disk carrier (106, 206) of each assembly (1, 2) in order to assembly the assemblies to one another, the assembly device comprising the first part of the reaction member of each assembly and at least one first extension of the outer disk carrier of each assembly.

13. The clutch mechanism (10) as claimed in the preceding claim, **characterized in that** the assembly device (3) comprises at least one rivet (1010) or one assembly screw configured to pass through an assembly orifice (1034, 2034) formed in at least one first angular sector (1033, 2033) of the first part (103A) of the reaction member (103, 203) of one assembly (1, 2) and through an assembly orifice (1034, 2034) formed in at least one first angular sector (1033, 2033) of the first part (103A) of the reaction member (103, 203) of the other assembly (1, 2) .
